(19) Europäisches Patentamt
European Patent Office
Office européen des brevets

(11) **EP 4 568 263 A1**

(12) **EUROPEAN PATENT APPLICATION**
published in accordance with Art. 153(4) EPC

(43) Date of publication:
**11.06.2025 Bulletin 2025/24**

(21) Application number: **24788065.1**

(22) Date of filing: **09.04.2024**

(51) International Patent Classification (IPC):
**H04N 21/8358** (2011.01)

(52) Cooperative Patent Classification (CPC):
**H04N 21/8358**

(86) International application number:
**PCT/CN2024/086828**

(87) International publication number:
**WO 2024/212963 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.04.2023 CN 202310403593**

(71) Applicant: **Beijing Volcano Engine Technology Co., Ltd.**
**Beijing 100190 (CN)**

(72) Inventors:
• **LIAN, Yihan**
 **Beijing 100028 (CN)**
• **GUO, Feng**
 **Beijing 100028 (CN)**
• **GUO, Fubo**
 **Beijing 100028 (CN)**
• **SU, Xiaodong**
 **Beijing 100028 (CN)**
• **LI, Minglei**
 **Beijing 100028 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **WATERMARK EMBEDDING METHOD AND APPARATUS, WATERMARK EXTRACTION METHOD AND APPARATUS, AND ELECTRONIC DEVICE AND STORAGE MEDIUM**

(57) Provided in the present disclosure are a watermark embedding method and apparatus, a watermark extraction method and apparatus, and an electronic device and a storage medium. The watermark embedding method comprises: acquiring a plurality of original videos, a video serial number of each original video and a watermark to be embedded; for any original video, dividing the original video according to a first number of the original videos and a second number of video frames corresponding to watermark codes, so as to obtain respective frame sequences, wherein each frame sequence comprises a first number of watermark units, each watermark unit comprises a first number of sub-units, and each sub-unit comprises a second number of continuous video frames; allocating a watermark code to each frame sequence according to a time sequence of the frame sequences and the order of the watermark codes, and determining a first watermark and a second watermark for each frame sequence according to the watermark codes which are respectively allocated to each frame sequence; and according to the video serial number of each original video, a first serial number of each watermark unit and a second serial number of each sub-unit, adding a target watermark to each sub-unit, so as to obtain a watermark video.

**(Cont. next page)**

EP 4 568 263 A1

Obtaining a plurality of original videos corresponding to a same video content, and a video serial number and a to-be-embedded watermark corresponding to each of the plurality of original videos, in which the to-be-embedded watermark includes at least one watermark code

S101

For each original video of the plurality of original videos, dividing the original video according to a first quantity and a second quantity to obtain a frame sequence of the original video, in which the first quantity indicates a quantity of the plurality of original videos, the second quantity indicates a quantity of video frames corresponding to the at least one watermark code in the to-be-embedded watermark, the frame sequence includes the first quantity of watermark units, each of the watermark units includes the first quantity of sub-units, and each of the sub-units includes the second quantity of consecutive video frames

S102

Allocating a watermark code for each of the frame sequences according to a timing of each of the frame sequences and an order of each watermark code, and determining a first watermark and a second watermark corresponding to each of the frame sequences according to the watermark code allocated to each of the frame sequences

S103

Adding a target watermark for each of the sub-units according to the video serial number of the original video, a first serial number of each of the watermark units in each frame sequence, and a second serial number of the sub-unit in each of the watermark units, to obtain a watermark video corresponding to the original video, in which the target watermark is one of a group consisting of the first watermark, the second watermark and the watermark code

S104

Fig. 1

**Description**

The present application claims priority to Chinese Patent Application No. 202310403593.5, filed on April 14, 2023, which is hereby incorporated by reference in its entirety as part of the present application.

TECHNICAL FIELD

The present disclosure relates to a watermark embedding and watermark extraction method, apparatus, electronic device and storage medium.

BACKGROUND

The digital watermark technology refers to embedding specific information into a digital product, which may be an audio, an image, a video, etc. When a product with a digital watermark is to be copied, the embedded information will also be copied. Common digital watermarks can be divided into two types, one is a visible watermark, and the other is a hidden watermark (that is, an invisible watermark), both of the two types can usually be used to identify the property right of the digital product. For example, a digital watermark may utilize redundancy of data to embed, in a digital product, specific identification information for identifying version attribution of content of the digital product. By means of the digital watermark embedded in the digital product, it can be accurately determined whether the digital product is used in infringement.

However, for the watermark added by the conventional digital watermark technology, after various content transformation operations such as compression, clipping and frame rate change are performed on the content of the digital product, the watermark in the digital content product is easy to be changed or removed, resulting in failure to extract an accurate watermark from the content of the digital product after content transformation, and thus resulting in failure to effectively detect the problem of property right of the content of the digital product.

SUMMARY

Embodiments of the present disclosure provide at least a watermark embedding and watermark extraction method, apparatus, electronic device and storage medium.

In a first aspect, the embodiments of the present disclosure provide a watermark embedding method, which includes:

obtaining a plurality of original videos corresponding to a same video content, and a video serial number and a to-be-embedded watermark corresponding to each of the original videos, in which the to-be-embedded watermark includes at least one watermark code;

for each original video of the plurality of original videos, dividing the original video according to a first quantity and a second quantity to obtain a frame sequence of the original video, in which the first quantity indicates a quantity of the plurality of original videos, the second quantity indicates a quantity of video frames corresponding to the at least one watermark code in the to-be-embedded watermark, the frame sequence includes the first quantity of watermark units, each of the watermark units includes the first quantity of sub-units, and each of the sub-units includes the second quantity of consecutive video frames;

allocating a watermark code for each of the frame sequences according to a timing of each of the frame sequences and an order of each watermark code, and determining a first watermark and a second watermark corresponding to each of the frame sequences according to the watermark code allocated to each of the frame sequences; and

adding a target watermark for each sub-unit to obtain a watermark video corresponding to the original video, according to the video serial number of each of the plurality of original videos, a first serial number of each watermark unit in each of the frame sequences, and a second serial number of the sub-unit in each watermark unit, in which the target watermark is one of a group consisting of the first watermark, the second watermark and the watermark code.

In a possible implementation, the determining the first watermark and the second watermark corresponding to each of the frame sequences according to the watermark code allocated to each of the frame sequences includes:

for each of the frame sequences, determining a watermark code corresponding to each of the sub-units in the frame sequence according to the watermark code allocated to the frame sequence;

according to the watermark code corresponding to each of the sub-units, determining a sub-code corresponding to each of the video frames in the sub-unit; and

according to the sub-code corresponding to each of the video frames in the sub-unit, determining the first watermark and the second watermark corresponding to the frame sequence.

In a possible implementation, according to the sub-code corresponding to each of the video frames in the sub-unit, the determining the first watermark and the second watermark corresponding to the frame sequence includes:

selecting at least one first video frame and at least one second video frame from the video frames in the sub-unit by using the second quantity and a preset selection manner;

according to a frame order of the first video frame, inverting a sub-code corresponding to each first video frame in turn to obtain the first watermark corresponding to the frame sequence; and

according to a frame order of the second video frame, inverting a sub-code corresponding to each second video frame in turn to obtain the second watermark corresponding to the frame sequence.

In a possible implementation, the adding the target watermark for each sub-unit according to the video serial number of the original video, the first serial number of each watermark unit in each of the frame sequences, and the second serial number of the sub-unit in each watermark unit includes:

for any target watermark unit in any one of the frame sequences, determining whether a target first serial number of the target watermark unit is consistent with the video serial number of the original video; and

if yes, determining the watermark code corresponding to the frame sequence as the target watermark corresponding to each sub-unit in the target watermark unit and adding the target watermark.

In a possible implementation, the method further includes:

when the target first serial number is inconsistent with the video serial number of the original video, selecting a target sub-unit with a second serial number consistent with the video serial number from the sub-units included in the target watermark unit; and

determining the first watermark corresponding to the frame sequence to which the target sub-unit belongs as the target watermark corresponding to the target sub-unit and adding the target watermark.

In a possible implementation, after selecting the target sub-unit with the second number consistent with the video serial number from the respective sub-units included in the target watermark unit, the method further includes:

determining the second watermark corresponding to the frame sequence to which the target sub-unit belongs as a target watermark corresponding to the sub-units other than the target sub-unit in the target watermark unit and adding the target watermark.

In a second aspect, the embodiments of the present disclosure provide a watermark extraction method, which includes:

obtaining a target video with a to-be-extracted watermark;

according to a third quantity and a fourth quantity, dividing the target video to obtain respective to-be-extracted frame sequences corresponding to the target video, in which the third quantity is a quantity of original videos used when a target video watermark is embedded in the target video, the fourth quantity is a quantity of video frames corresponding to a watermark code in the target video watermark, the to-be-extracted frame sequence includes a third quantity of to-be-extracted watermark units, each of the to-be-extracted watermark units includes a third quantity of to-be-extracted sub-units, and each of the to-be-extracted sub-units includes a fourth quantity of consecutive video frames;

for any one of the to-be-extracted sub-units in any one of the to-be-extracted watermark units, according to a pixel value of each of the video frames in the to-be-extracted sub-unit, determining a sub-unit watermark corresponding to the to-be-extracted sub-unit; and

extracting respective target video watermarks corresponding to the target video according to a unit serial number of each of the to-be-extracted watermark units in each of the to-be-extracted frame sequences, the sub-unit watermark corresponding to each of the to-be-extracted sub-units, and a watermark type.

In a possible implementation, the extracting the respective target video watermarks corresponding to the target video according to a unit serial number of each of the to-be-extracted watermark units in each of the to-be-extracted frame sequences, the sub-unit watermark corresponding to each of the to-be-extracted sub-units, and a watermark type includes:

according to a watermark type of the sub-unit watermark corresponding to each of the to-be-extracted sub-units, filtering out the sub-unit watermark of a preset type;

for any to-be-extracted watermark unit, according to the sub-unit watermarks included in the to-be-extracted watermark unit after filtering, determining a target watermark code corresponding to the to-be-extracted watermark unit; and

according to a unit serial number and the target watermark code corresponding to each of the to-be-extracted watermark units, extracting the respective target video watermarks corresponding to the target video.

In a third aspect, the embodiments of the present disclosure further provide a watermark embedding apparatus, which includes:

a first obtaining module, configured to obtain a plurality of original videos corresponding to a same video content, and a video serial number and a to-be-embedded watermark corresponding to each of the plurality of original videos, in which the to-be-embedded watermark includes at least one watermark code;

a first dividing module, configured to, for each original video of the plurality of original videos, divide the original video according to a first quantity and a second quantity to obtain a frame sequence of the original video, in which the first quantity indicates a quantity of the plurality of original videos, the second quantity indicates a quantity of video frames corresponding to the at least one watermark code in the to-be-embedded watermark, the frame sequence includes the first quantity of watermark units, each of the watermark units includes the first quantity of sub-units, and each of the sub-units includes the second quantity of consecutive video frames;

a first determining module, configured to allocate a watermark code for each of the frame sequences according to a timing of each of the frame sequences and an order of each watermark code, and determine a first watermark and a second watermark corresponding to each of the frame sequences according to the watermark code allocated to each of the frame sequences; and

an adding module, configured to add a target watermark for each sub-unit to obtain a watermark video corresponding to the original video, according to the video serial number of each of the plurality of original video, a first serial number of each watermark unit in each of the frame sequences, and a second serial number of the sub-unit in each watermark unit, in which the target watermark is one of a group consisting of the first watermark, the second watermark and the watermark code.

In a fourth aspect, the embodiments of the present disclosure further provide a watermark extraction apparatus, which includes:

a second obtaining module, configured to obtain a target video with a to-be-extracted watermark;

a second dividing module, configured to, according to a third quantity and a fourth quantity, divide the target video to obtain respective to-be-extracted frame sequences corresponding to the target video, in which the third quantity is a quantity of original videos used when a target video watermark is embedded in the target video, the fourth quantity is a quantity of video frames corresponding to a watermark code in the target video watermark, the to-be-extracted frame sequence includes a third quantity of to-be-extracted watermark units, each of the to-be-extracted watermark units includes a third quantity of to-be-extracted sub-units, and each of the to-be-extracted sub-units includes a fourth quantity of consecutive video frames;

a second determining module, configured to, for any one of the to-be-extracted sub-units in any one of the to-be-extracted watermark units, according to a pixel value of each of the video frames in the to-be-extracted sub-unit, determine a sub-unit watermark corresponding to the to-be-extracted sub-unit; and

an extraction module, configured to extract respective target video watermarks corresponding to the target video according to a unit serial number of each of the to-be-extracted watermark units in each of the to-be-extracted frame sequences, the sub-unit watermark corresponding to each of the to-be-extracted sub-units, and a watermark type.

In a fifth aspect, the embodiments of the present disclosure further provide an electronic device, a processor and a memory, the memory stores machine-readable instructions executable by the processor, the processor is configured to execute the machine-readable instructions stored in the memory, and when the machine-readable instructions are executed by the processor, the processor executes the steps in the first aspect or any possible implementation of the first aspect; or, when the machine-readable instructions are executed by the processor, the processor executes the steps in the second aspect or any possible implementation of the second aspect.

In a sixth aspect, the embodiments of the present disclosure further provide a computer-readable storage medium, a computer program is stored on the computer-readable storage medium, and when the computer program is executed, the steps in the first aspect or any possible implementation of the first aspect are executed; or, when the computer program is executed, the steps in the second aspect or any possible implementation of the second aspect are executed.

For the description of the effects of the watermark embedding apparatus and the watermark extraction apparatus, the electronic device and the computer-readable storage medium, reference may be made to the description of the watermark embedding method and the watermark extraction method, which will not be repeated here.

In order to make the above objects, features and advantages of the present disclosure more comprehensible, optional embodiments are described in detail below with reference to the drawings.

BRIEF DESCRIPTION OF DRAWINGS

In order to more clearly illustrate the technical solutions of the embodiments of the present disclosure, the drawings that need to be used in the embodiments will be briefly described below. The drawings here are incorporated into the specification and constitute a part of the specification. The drawings illustrate embodiments in accordance with the present disclosure, and are used together with the specification to illustrate the technical solutions of the present disclosure. It should be understood that the following drawings only illustrate some embodiments of the present disclosure, and therefore should not be construed as limiting the scope. For those of ordinary skill in the art, other relevant drawings can also be obtained from these drawings without creative efforts.

Fig. 1 shows a flowchart of a watermark embedding method provided by embodiments of the present disclosure;
Fig. 2 shows a specific implementation flowchart of a watermark embedding method provided by embodiments of the present disclosure;
Fig. 3 shows a schematic diagram of watermark codes in 4 original videos provided by embodiments of the present disclosure;
Fig. 4 shows a specific implementation flowchart of adding a target watermark provided by embodiments of the present disclosure;
Fig. 5 shows a flowchart of a watermark extraction method provided by embodiments of the present disclosure;
Fig. 6 shows a specific implementation flowchart of extracting a target video watermark corresponding to a target video provided by embodiments of the present disclosure;
Fig. 7 shows a schematic diagram of an implementation process of a watermark embedding and extraction method provided by embodiments of the present disclosure;
Fig. 8 shows a schematic diagram of a watermark embedding apparatus provided by embodiments of the present disclosure;
Fig. 9 shows a schematic diagram of a watermark extraction apparatus provided by embodiments of the present disclosure; and
Fig. 10 shows a schematic diagram of a structure of an electronic device provided by embodiments of the present disclosure.

DETAILED DESCRIPTION

In order to make the objects, technical solutions and advantages of the embodiments of the present disclosure more clear, the technical solutions in the embodiments of the present disclosure will be clearly and completely described below with reference to the drawings in the embodiments of the present disclosure. Obviously, the described embodiments are only a part of the embodiments of the present disclosure, but not all of them. The components of the embodiments of the present disclosure described and illustrated herein may be arranged and designed in various different configurations. Therefore, the following detailed description of the embodiments of the present disclosure is not intended to limit the scope of the present disclosure claimed, but merely represents selected embodiments of the present disclosure. Based on the embodiments of the present disclosure, all other embodiments obtained by those skilled in the art without creative efforts belong to the protection scope of the present disclosure.

In addition, the terms "first", "second", etc. in the specification and claims of the embodiments of the present disclosure and the above drawings are used to distinguish similar objects, but are not necessarily used to describe a specific order or sequence. It should be understood that the data used in this way can be interchanged under appropriate circumstances, so that the embodiments described here can be implemented in a sequence other than those illustrated or described here.

The term "a plurality of" or "a number of" mentioned herein refers to two or more. "and/or", describes the association relationship of associated objects, indicating that there may be three relationships. For example, A and/or B may indicate: three cases where A exists alone, A and B exist at the same time, and B exists alone. The character "/" generally represents that the associated objects before and after "/" are in an "or" relationship.

It is found through research that with the rapid development of mobile Internet technology and video technology, a large number of video contents are spread on different social platforms and websites every day. At the same time, it also brings a problem. When a user's video content is uploaded to a social platform or website without authorization by other users, it will constitute an infringement of the user's copyright. Therefore, strengthening the detection of user copyright issues has become an increasingly important issue. The digital watermark technology, as an important technology for guaranteeing the property right of digital products, can be effectively used to detect copyright issues of the video contents. For example, a digital watermark can be added to a video through a video watermark technology, so as to realize copyright identification and detection of the video by using the digital watermark.

However, a series of video content transformation manners also appear at the same time. For example, various content transformation operations such as compression, clipping and frame rate change are performed on the video, so as to change or remove the digital watermark. Among these video content transformation manners, the better manners considering transformation difficulty and transformation effect are multi-video joint transformation operation, for example, pixel median transformation operation based on multiple videos, and pixel mean transformation operation based on multiple videos. For the pixel median transformation operation based on multiple videos, the specific process is as follows: obtaining a plurality of videos with different digital watermarks (where the plurality of videos correspond to the same content), sorting pixels at the same timing and space position in the plurality of videos according to pixel values, and taking a median of the sorting as a pixel value at this position in the video after content transformation. In this way, the video obtained by the pixel median transformation operation based on multiple videos not only has strong erasure capability for the digital watermark, but also has no obvious difference in video content relative to the original video. Therefore, how to improve the watermark reliability of the digital watermark technology under the pixel median transformation operation based on multiple videos has become a technical difficulty.

Based on the above research, the present disclosure provides a watermark embedding and watermark extraction method, apparatus, electronic device and storage medium. In the watermark embedding method, the original video is divided based on a first quantity and a second quantity, the first quantity indicates a quantity of the original video, and the second quantity indicates a quantity of video frames corresponding to the watermark code, this process can not only divide the video frames according to the timing of the video frames to realize that one watermark code corresponds to one frame sequence, but also effectively increase the number of video frames corresponding to one watermark code, that is, enrich the number of video frames representing each watermark code. The more the number of video frames corresponding to one watermark code, the more information that can be referred to, and the higher the success rate and accuracy of extracting the watermark code after the content transformation operation is performed on the watermark video. Therefore, by increasing the number of video frames corresponding to one watermark code, the accuracy and success rate of extracting the original to-be-embedded watermark from the video after content transformation can be improved after the content transformation operation is performed on the watermark video. In addition, by using the respective watermark codes in the real to-be-embedded watermark, the first watermark and the second watermark corresponding to each frame sequence are determined and added to the original video, which can protect the original to-be-embedded watermark by using the first watermark and the second watermark, thereby further improving the accuracy and success rate of extracting the original to-be-embedded watermark after the content transformation operation is performed on the watermark video. The watermark embedding performed by the watermark embedding method provided by the embodiments of the present disclosure can effectively improve the security and reliability of the embedded video watermark (especially the watermark reliability under the pixel median transformation operation based on multiple videos), effectively prevent the occurrence of the problem that the video attribution cannot be identified due to the watermark being easily changed or removed, and improve the security of the watermark video after embedding the watermark, thereby realizing the effective detection of the property right attribution of the content of the digital product based on the security and reliability of the watermark.

In the watermark extraction method, after the target video is obtained, the original video is divided by using a third quantity and a fourth quantity, the third quantity indicate a quantity of original videos used when the target video watermark is embedded, and the fourth quantity indicates a quantity of video frames corresponding to the watermark code, so that the respective frame sequences in the target video can be accurately divided. The law of the pixel values of the respective video frames in the to-be-extracted sub-unit in the frame sequence is used to accurately determine the sub-unit watermark and the watermark type included in the to-be-extracted sub-unit. Finally, the original respective target video watermarks included in the target video can be accurately restored by using the unit serial number of the respective to-be-extracted watermark units, the sub-unit watermark, and the watermark type, thereby accurately locating the video leakage party according to the video provider corresponding to the restored target video watermark to achieve the purpose of video leakage detection.

The defects of the above solutions are the results obtained by the inventor(s) after practice and careful research. Therefore, the discovery process of the above problems and the solutions proposed by the present disclosure for the above problems should be the contributions of the inventor(s) to the present disclosure in the process of the present disclosure.

It should be noted that similar reference numerals and letters represent similar items in the following drawings. Therefore, once an item is defined in one drawing, it is not necessary to further define and explain it in subsequent drawings.

It should be understood that before using the technical solutions disclosed in the embodiments of the present disclosure, the user should be informed of the type, usage scope, usage scenario, etc. of the personal information involved in the present disclosure in an appropriate manner according to relevant laws and regulations, and the user's authorization should be obtained.

To facilitate understanding of the embodiments, a watermark embedding method disclosed in the embodiments of the present disclosure will be described in detail first. An execution body of the watermark embedding method provided by the embodiments of the present disclosure is generally a terminal device or other processing device with a certain computing capability, the terminal device may be a user equipment (UE), a mobile device, a user terminal, a terminal, a personal digital assistant device (PDA), a handheld device, a computer device, etc. In some possible implementations, the watermark embedding method may be implemented by a processor calling a computer-readable instruction stored in a memory.

The watermark embedding method provided by the embodiments of the present disclosure will be described below by taking an execution body as an electronic device as an example.

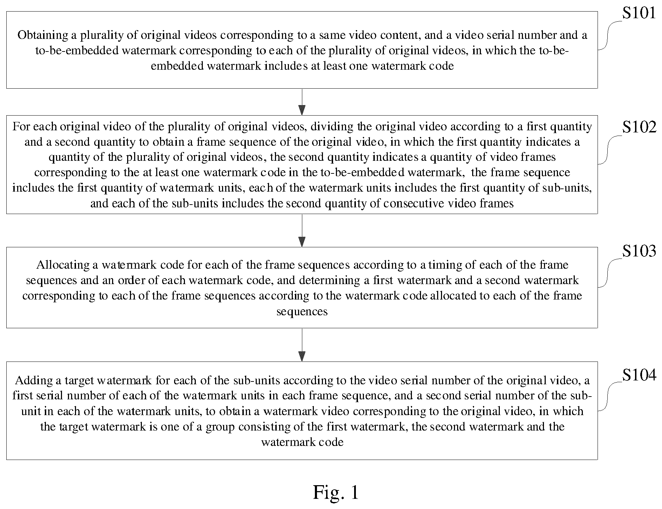

As shown in Fig. 1, which is a flowchart of a watermark embedding method provided by the embodiments of the present disclosure, the method may include the following steps.

S101, obtaining a plurality of original videos corresponding to a same video content, and a video serial number and a to-be-embedded watermark corresponding to each of the plurality of original videos, in which the to-be-embedded watermark includes at least one watermark code.

Here, the original video is a video without an embedded watermark, and the to-be-embedded watermark is a watermark that needs to be embedded in the original video, the to-be-embedded watermark may include at least one watermark code. The to-be-embedded watermark may be a character string composed of binary codes "0" and "1", and the respective binary codes in the character string are the watermark codes. Exemplarily, the to-be-embedded watermark may be 00101110, where "0" and "1" are the respective watermark codes included in the to-be-embedded watermark. The plurality of original videos correspond to the same video content, that is, the plurality of original videos are the same video.

One original video corresponds to one to-be-embedded watermark, and the to-be-embedded watermarks corresponding to the respective original videos are different, and the information identified by different to-be-embedded watermarks is different, that is, different to-be-embedded watermarks correspond to different identity documents (ID for short). The to-be-embedded watermark has a certain watermark length, which may be represented by m bits (m is an integer greater than 1), one watermark bit corresponds to n consecutive video frames, and at the same time, one watermark bit corresponds to one watermark code. The number of n may be set according to experience, which is not specifically limited in the embodiments of the present disclosure, but an odd number is usually taken.

Exemplarily, in the case where the to-be-embedded watermark is 00101110, the watermark length of the to-be-embedded watermark is 8 bits, and the watermark code corresponding to one bit is one 0 or one 1. In the case where one bit corresponds to 4 consecutive video frames, the 4 consecutive video frames may be embedded with the watermark code corresponding to the bit, that is, the 4 consecutive video frames may be used to represent 1 bit.

One original video has one video serial number, and the video serial number may match the number of original videos. For example, in the case where the number of original videos is 4, the video serial number may be 1 to 4.

Exemplarily, the number of original videos may be determined according to a maximum number of videos and/or the number of video frames allowed to participate in the pixel median transformation operation based on multiple videos. For example, in the case where 4 videos are allowed to participate in the pixel median transformation operation based on multiple videos, the number of obtained original videos may be 4. The maximum number of videos allowed to participate in the pixel median transformation operation based on multiple videos is represented by K below. It should be noted that the value of K is not specifically limited in the embodiments of the present disclosure.

Alternatively, for the original video, in the case where the number of corresponding video issuers is less than the above maximum number, the number of obtained original videos may also be the number of video issuers. The respective video issuers corresponding to the original videos are configured to issue original videos with different to-be-embedded watermarks.

In specific implementation, one original video may be obtained first, and then the original video is copied according to the number of K to obtain K original videos. In this case, the to-be-embedded watermark corresponding to each original video and the video serial number of each original video may be obtained. Alternatively, K original videos that need to be embedded with watermarks, and the to-be-embedded watermark and the video serial number corresponding to each original video may also be directly obtained from the memory.

S102, for each original video of the plurality of original videos, dividing the original video according to a first quantity and a second quantity to obtain a frame sequence of the original video, in which the first quantity indicates a quantity of the plurality of original videos, the second quantity indicates a quantity of video frames corresponding to the at least one watermark code in the to-be-embedded watermark, the frame sequence includes the first quantity of watermark units, each of the watermark units includes the first quantity of sub-units, and each of the sub-units includes the second quantity of consecutive video frames.

Here, the first quantity is the number/quantity of obtained original videos, which is equal to the above K value. The second quantity is the number/quantity of consecutive video frames corresponding to one watermark bit of the to-be-embedded watermark, that is, the number of consecutive video frames corresponding to one watermark code, which is equal to the above n value. The number of video frames corresponding to one frame sequence may be K*K*n. In this way, it is possible to represent 1 watermark bit of the to-be-embedded watermark by using K*K*n consecutive video frames. In other words, 1 watermark code of the to-be-embedded watermark is represented by using K*K*n consecutive video frames.

In specific implementation, for any one of the original videos, the original video may be divided according to the first quantity and the second quantity according to a timing of the respective video frames in the original video, to obtain the respective frame sequences corresponding to the original video. Here, one frame sequence includes K watermark units, each watermark unit may include K sub-units, and each sub-unit includes n consecutive video frames. That is, every K*K*n consecutive video frames in the original video may represent one watermark bit of the to-be-embedded watermark.

For any one of the frame sequences, the frame sequence corresponds to 1 watermark bit in one to-be-embedded watermark. In this case, each watermark unit in the frame sequence corresponds to one watermark code, and the watermark code is the watermark code corresponding to the watermark bit. Moreover, the watermark codes corresponding to the respective sub-units in one watermark unit are all the watermark code corresponding to the watermark unit. Each of the consecutive n video frames in one sub-unit corresponds to one video frame code, and the video frame codes corresponding to the consecutive n video frames are used to characterize the watermark code corresponding to the sub-unit.

Each of the watermark units included in each frame sequence may have a corresponding first serial number. For example, when one frame sequence includes 4 video unites, the first serial numbers of the respective watermark units may be 1 to 4 in turn, that is, watermark units 1 to 4. At the same time, each of the sub-units in one watermark unit may have a corresponding second serial number. For example, when one watermark unit includes 4 sub-units, the second serial numbers of the respective sub-units may be 1 to 4 in turn, that is, sub-units 1 to 4.

For example, for the original video 1 with the video serial number of 1, the first frame sequence corresponding to the original video 1 may include 4 watermark units, and the first serial numbers are 1 to 4, that is, the first frame sequence includes watermark units 1 to 4. The second frame sequence also includes 4 watermark units, and the first serial numbers are also 1 to 4, that is, the second frame sequence includes watermark units 1 to 4. The watermark units 1 to 4 in the first frame sequence are different from the watermark units 1 to 4 in the second frame sequence. Each watermark unit may include 4 sub-units, and the second serial numbers are 1 to 4, that is, the watermark unit 1 includes sub-units 1 to 4, the watermark unit 2 includes sub-units 1 to 4, the watermark unit 3 includes sub-units 1 to 4, and the watermark unit 4 includes sub-units 1 to 4. Each sub-unit includes consecutive n video frames. For example, the sub-unit 1 in the watermark unit 1 includes the 1st to nth frames, the sub-unit 2 includes the (n+1)th to 2nth frames, the sub-unit 3 includes the (2n+1)th to 3nth frames, the sub-unit 4 includes the (3n+1)th to 4nth frames, the sub-unit 1 in the watermark unit 2 includes the (4n+1)th to 5nth frames, the sub-unit 2 in the watermark unit 2 includes the (5n+1)th to 6nth frames, and so on. By analogy, different sub-units correspond to different consecutive n video frames.

The number of to-be-embedded watermarks corresponding to one original video that need to be embedded in the one original video may be determined according to a total number of video frames of the original video, a watermark length of the to-be-embedded watermark, and the number of video frames corresponding to each frame sequence. For example, in the case where the total number of video frames of the original video is Z, the number of to-be-embedded watermarks that need to be embedded is Z/(m×(K*K*n)). For example, the watermark ID1 may be embedded in the original video 1 for 6 times.

Based on the above S102, the respective frame sequences corresponding to the original video may be divided in each original video.

S103, allocating a watermark code for each of the frame sequences according to a timing of each of the frame sequences and an order of each watermark code, and determining a first watermark and a second watermark corresponding to each of the frame sequences according to the watermark code allocated to each of the frame sequences.

Here, the timing of the frame sequence may be determined according to the timing of the respective video frames in the frame sequence. For example, the frame sequence 1 includes the 1st to xth frames, the frame sequence 2 includes the (x+1)th to 2xth frames, and the frame sequence 3 includes the (2x+1)th to 3xth frames, then the timing sequence of the frame sequences 1 to 3 is: the frame sequence 1 is earlier than the frame sequence 2, and the frame sequence 2 is earlier than the frame sequence 3. The order of the respective watermark codes is the sequence of the respective watermark codes in the to-be-embedded watermark.

The watermark code allocated to one frame sequence is the watermark code indicated by the watermark bit corresponding to the frame sequence. For example, an identity document corresponding to one to-be-embedded watermark 1 is 1001, and the original video corresponds to 8 frame sequences, then the watermark code corresponding to the first frame sequence is 1, the watermark code corresponding to the second frame sequence is 0, the watermark code corresponding to the third frame sequence is 0, and the watermark code corresponding to the fourth frame sequence is 1. In this case, after the first 4 watermark codes are embedded, it indicates that one complete to-be-embedded watermark 1 has been successfully embedded once. After that, the to-be-embedded watermark 1 may be embedded for the second time. Specifically, the watermark code corresponding to the fifth frame sequence is 1, the watermark code corresponding to the sixth frame sequence is 0, the watermark code corresponding to the seventh frame sequence is 0, and the watermark code corresponding to the eighth frame sequence is 1. In this case, it may indicate that one complete to-be-embedded watermark 1 has been successfully embedded for the second time.

In specific implementation, the watermark codes may be allocated to the respective frame sequences according to the timing sequence of the respective frame sequences and the sequence of the respective watermark codes in the to-be-embedded watermark. Then, for any one of the frame sequences, a source code of the watermark code corresponding to the frame sequence may be inverted to obtain a first watermark corresponding to the frame sequence, and a complement code of the watermark code corresponding to the frame sequence may be inverted to obtain a second watermark corresponding to the frame sequence.

In an embodiment, the step of determining the first watermark and the second watermark in S103 may be implemented according to the following steps.

S103-1, for any one of the frame sequences, determining a watermark code corresponding to each of the sub-units in the frame sequence according to the watermark code allocated to the frame sequence.

Exemplarily, for any one of the frame sequences, the watermark code allocated to the frame sequence may be directly taken as the watermark code corresponding to each of the sub-units in the frame sequence.

S103-2, determining a sub-code corresponding to each of the video frames in the sub-unit according to the watermark code corresponding to the sub-unit.

Here, the sub-code corresponding to the video frame is the video frame code of the video frame. The sub-codes of the respective video frames in one sub-unit are different, and the sub-codes of the consecutive n video frames in one sub-unit are used to characterize the watermark code corresponding to the sub-unit.

In specific implementation, for any one of the sub-units, the sub-code of each of the video frames in the sub-unit may be determined according to the watermark code corresponding to the sub-unit.

S103-3, determining the first watermark and the second watermark corresponding to the frame sequence according to the sub-code corresponding to each video frame in the sub-unit.

It should be noted that since the watermark codes corresponding to the respective watermark units in one frame sequence are all the watermark code corresponding to the frame sequence, and the watermark codes corresponding to the respective sub-units in one watermark unit are all the watermark code corresponding to the watermark unit, the respective sub-units in one frame sequence all correspond to the same watermark code. Therefore, in the specific implementation of the above S103, the first watermark and the second watermark corresponding to the sub-unit may also be directly determined according to the watermark code corresponding to each sub-unit, and then the first watermark and the second watermark are taken as the first watermark and the second watermark corresponding to the frame sequence where the sub-unit is located.

Exemplarily, according to the watermark code corresponding to any sub-unit in the frame sequence, the sub-code of each video frame in the sub-unit may be determined. For example, the sub-codes of the first x video frames in the sub-unit may be inverted frame by frame according to the timing to obtain the first watermark. In this case, the sub-codes of the last x video frames in the sub-unit may be inverted frame by frame according to the timing to obtain the second watermark. The first watermark and the second watermark are taken as the first watermark and the second watermark corresponding to the frame sequence where the sub-unit is located.

In an embodiment, the above S103-3 may be implemented according to the following steps.

S103-3-1, selecting at least one first video frame and at least one second video frame from the video frames in the sub-unit by using the second quantity and a preset selection manner.

Here, the preset selection manner may be characterized by using the following formula 1:

$$Y = \frac{(n-1)}{2}, \text{(Formula 1)}$$

where Y represents the number of video frames that need to be selected, and n represents the second quantity, that is, the number of video frames corresponding to one watermark bit.

In the specific implementation, for the sub-unit currently processed, the first $\frac{(n-1)}{2}$ video frame(s) in the sub-unit may be taken as the selected first video frame(s), and the last $\frac{(n-1)}{2}$ video frame(s) in the sub-unit may be taken as the selected second video frame(s).

S103-3-2, inverting a sub-code corresponding to each first video frame in turn according to a frame order of the first video frame, to obtain the first watermark corresponding to the frame sequence.

S103-3-3, inverting a sub-code corresponding to each second video frame in turn according to a frame order of the second video frame, to obtain the second watermark corresponding to the frame sequence.

Here, the frame order of the first video frame and the frame order of the second video frames are respectively the timing of each first video frame and the timing of each second video frame.

In the specific implementation, the sub-code of each first video frame may be inverted frame by frame in turn according to the timing of the first video frame, to obtain the first watermark corresponding to the sub-unit. In this case, the sub-code of each second video frame may be inverted frame by frame in turn according to the timing of the second video frame, to obtain the second watermark corresponding to the sub-unit.

In this way, the first watermark and the second watermark are watermarks obtained after inversion, it can be ensured that after the pixel median transformation operation based on multiple videos is performed on the watermark video added with the to-be-embedded watermark, in the plurality of sub-units in each frame sequence, there must be a watermark code corresponding to at least one sub-unit, which is the original watermark code located between the first watermark and the second watermark, so that when the watermark extraction is performed on the video after content transformation, the original to-be-embedded watermark in the video can be accurately extracted, thereby accurately determining the leakage party corresponding to the video to achieve the purpose of video leakage detection.

S104, adding a target watermark for each of the sub-units according to the video serial number of the original video, a first serial number of each of the watermark units in each frame sequence, and a second serial number of the sub-unit in each of the watermark units, to obtain a watermark video corresponding to the original video, in which the target watermark is one of a group consisting of the first watermark, the second watermark and the watermark code.

Here, one target watermark may be determined for one sub-unit, and the target watermark may be one of a group consisting of the first watermark, the second watermark or the watermark code corresponding to the sub-unit. One original video corresponds to one watermark video, and the watermark video is obtained by adding the corresponding to-be-embedded watermark to the original video. For example, the original video includes 1 to 4, the identity document corresponding to the to-be-embedded watermark is watermarks ID1 to ID4, and the watermark video 1 to 4 may be obtained finally. The watermark ID1 is embedded in the watermark video 1, the watermark ID2 is embedded in the watermark video 2, the watermark ID3 is embedded in the watermark video 3, and the watermark ID4 is embedded in the watermark video 4.

In the specific implementation, for each original video, the sub-unit that needs to be added with the watermark code in each frame sequence may be determined according to the video serial number of the original video and the first serial number of each watermark unit. In this case, the sub-unit that needs to be added with the first watermark may be determined according to the second serial number of the sub-unit in each watermark unit and the video serial number of the original video. Finally, the second watermark may be added to the sub-units other than the sub-unit added with the first watermark and the sub-unit added with the watermark code corresponding to the original video. In this way, it is possible to add the corresponding target watermark to each sub-unit in the original video, so as to finally obtain the watermark video that is successfully embedded with the to-be-embedded watermark.

In this way, the original video is divided based on the first quantity indicating the number of the original video and the second quantity indicating the number of video frames corresponding to the watermark code, which can not only divide the video frames according to the timing of the video frames to realize that one watermark code corresponds to one frame sequence, but also effectively increase the number of video frames corresponding to one watermark code, that is, enrich the number of video frames representing each watermark code. The more the number of video frames corresponding to one watermark code, the more information that can be referred to, and the higher the success rate and accuracy of extracting the watermark code after the content transformation operation is performed on the watermark video. Therefore, by increasing the number of video frames corresponding to one watermark code, the accuracy and success rate of extracting the original to-be-embedded watermark from the video after content transformation can be improved after the content transformation operation is performed on the watermark video. In addition, by using the respective watermark codes in the real to-be-embedded watermark, the first watermark and the second watermark corresponding to each frame sequence are determined and added to the original video, which can protect the original to-be-embedded watermark by using the first watermark and the second watermark, thereby further improving the accuracy and success rate of extracting the original to-be-embedded watermark after the content transformation operation is performed on the watermark video. The watermark embedding performed by the watermark embedding method provided by the embodiments of the present disclosure can effectively improve the security and reliability of the embedded video watermark (especially the watermark reliability under the pixel median transformation operation based on multiple videos), effectively prevent the occurrence of the problem that the video attribution cannot be identified due to the watermark being easily changed or removed, and improve the security of the watermark video after embedding the watermark, thereby realizing the effective detection of the property right attribution of the content of the digital product based on the security and reliability of the watermark.

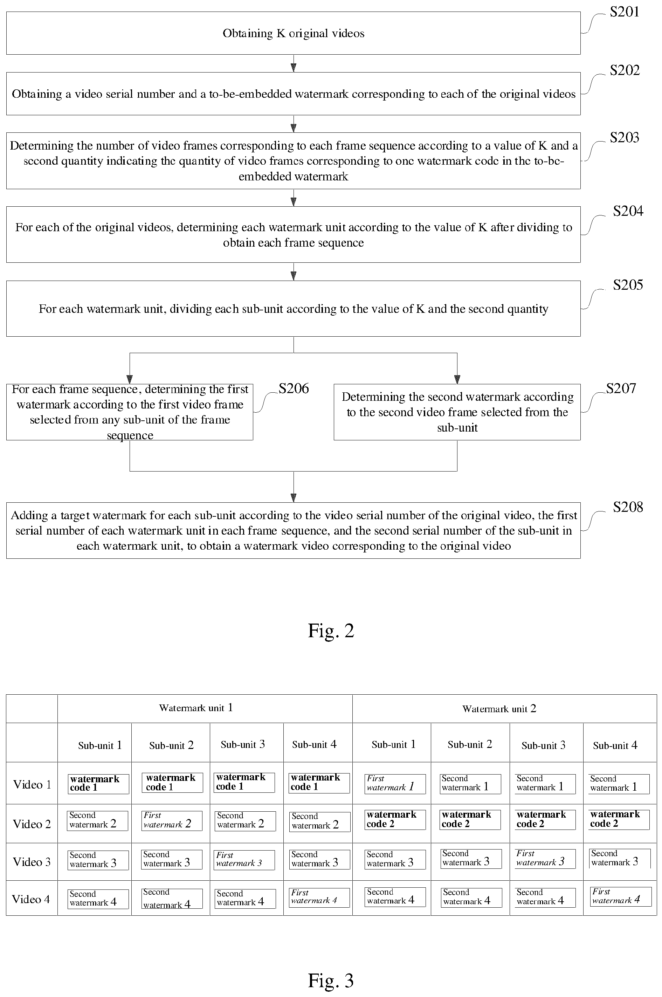

As shown in Fig. 2, which is a specific implementation flowchart of a watermark embedding method provided by the embodiments of the present disclosure, the method may include the following steps.

S201, obtaining K original videos.

S202, obtaining a video serial number and a to-be-embedded watermark corresponding to each of the original videos.

S203, determining the number of video frames corresponding to each frame sequence according to a value of K and a second quantity indicating the quantity of video frames corresponding to one watermark code in the to-be-embedded watermark.

The number of consecutive video frames included in each frame sequence is K*K*n frames.

S204, for each of the original videos, determining each watermark unit according to the value of K after dividing to obtain each frame sequence.

S205, for each watermark unit, dividing each sub-unit according to the value of K and the second quantity.

S206, for each frame sequence, determining the first watermark according to the first video frame selected from any sub-unit of the frame sequence.

S207, determining the second watermark according to the second video frame selected from the sub-unit.

Here, there is no strict execution sequence between S206 and S207, which may be executed synchronously or asynchronously.

S208, adding a target watermark for each sub-unit according to the video serial number of the original video, the first serial number of each watermark unit in each frame sequence, and the second serial number of the sub-unit in each watermark unit, to obtain a watermark video corresponding to the original video.

For the specific implementation steps of the above S201 to S208, reference may be made to the above embodiments, which will not be repeated here.

As shown in Fig. 3, which is a schematic diagram of watermark codes in 4 original videos provided by the embodiments of the present disclosure, one frame sequence of each original video (namely, video 1 to 4) corresponds to four watermark units, but only two watermark units are shown in Fig. 3 as an example. Each watermark unit includes 4 sub-units, and each sub-unit has a corresponding target watermark. The specific implementation steps of the above S104 will be described in detail below with reference to Fig. 3.

S104-1, for any target watermark unit in any frame sequence, determining whether a target first serial number of the target watermark unit is consistent with a video serial number of the original video.

Here, the target watermark unit is a watermark unit that currently needs to be embedded with a watermark in the frame sequence, and the target first serial number is a first serial number corresponding to the target watermark unit in the frame sequence to which the target watermark unit belongs.

In the specific implementations, for any original video that is currently embedded with a watermark, it may be first determined whether the respective frame sequences corresponding to the original video are all embedded with the corresponding target watermarks. If yes, it may be determined that the corresponding to-be-embedded watermark has been successfully embedded for the original video, and the watermark video corresponding to the original video may be obtained. If not, when adding a watermark to any target watermark unit in any frame sequence of the original video, the watermark code corresponding to the frame sequence may be obtained. Moreover, it may be determined whether the target first serial number of the target watermark unit is equal to the video serial number of the original video.

S104-2: if yes, determining the watermark code corresponding to the frame sequence as the target watermark corresponding to each sub-unit in the target watermark unit and adding the target watermark.

Here, when the target first serial number of the target watermark unit is equal to the video serial number of the original video, the watermark code corresponding to the frame sequence to which the target watermark unit belongs may be taken as the target watermark corresponding to each sub-unit in the target watermark unit and added.

Exemplarily, for the video 1, the watermark code corresponding to the frame sequence 1 may be added to each sub-unit in the watermark unit 1 in the first frame sequence of the video 1; the watermark code corresponding to the frame sequence 2 may be added to each sub-unit in the watermark unit 1 in the second frame sequence of the video 1; the watermark code corresponding to the frame sequence 3 may be added to the each sub-unit in the watermark unit 1 in the third frame sequence of the video 1, and so on, and finally, the corresponding target watermark is added to the sub-unit in the watermark unit 1 in each frame sequence.

For example, in Fig. 3, the watermark code corresponding to the first frame sequence of the video 1 is the watermark code 1, the watermark code corresponding to the first frame sequence of the video 2 is the watermark code 2, the watermark code corresponding to the first frame sequence of the video 3 is the watermark code 3, and the watermark code corresponding to the first frame sequence of the video 4 is the watermark code 4, the values corresponding to the watermark codes 1 to 4 are one of the binary codes 0 and 1. When adding the target watermark to the first frame sequence in the video 1, it may be determined that the unit serial number of the watermark unit 1 is consistent with the video serial number of the video 1, and then the watermark code 1 may be taken as the target watermark of each sub-unit in the watermark unit 1 and added. Similarly, the watermark code 2 may be added to each sub-unit in the watermark unit 2 in the first frame sequence of the video 2 (as shown in Fig. 3), the watermark code 3 may be added to each sub-unit in the watermark unit 3 in the first frame sequence of the video 3 (not shown in Fig. 3), and the watermark code 4 may be added to each sub-unit in the watermark unit 4 in the first frame sequence of the video 4 (not shown in Fig. 3).

In another embodiment, when the target first serial number is inconsistent with the video serial number of the original video, the target sub-unit with the second serial number consistent with the video serial number may be selected from the respective sub-units included in the target watermark unit. Then, the first watermark corresponding to the frame sequence to which the target sub-unit belongs may be determined as the target watermark corresponding to the target sub-unit and added.

Taking the target watermark unit as the watermark unit 2 corresponding to the video 1 in Fig. 3 as an example, when the target first serial number of the watermark unit 2 is inconsistent with the video serial number of the video 1, the watermark code corresponding to the first frame sequence cannot be taken as the target watermark of each sub-unit in the watermark unit 2, and it is still necessary to continue to determine the target watermark corresponding to each sub-unit in the watermark unit 2. Therefore, the sub-unit 1 with the second serial number of 1 in the watermark unit 2 may be taken as the target sub-unit.

Then, the first watermark 1 corresponding to the first frame sequence of the video 1 may be obtained. Optionally, the first watermark and the second watermark corresponding to the target sub-unit may also be directly determined according to the first video frame and the second video frame selected from the target sub-unit. Here, the obtained first watermark corresponding to the first frame sequence and the directly calculated first watermark are the same watermark, because the watermark code corresponding to one frame sequence is consistent with the watermark code corresponding to each sub-unit in the frame sequence. Finally, the first watermark 1 may be taken as the target watermark of the target sub-unit and added.

Further, after the target sub-unit is selected, the second watermark corresponding to the frame sequence to which the target sub-unit belongs may also be determined as the target watermark corresponding to the sub-units other than the target sub-unit in the target watermark unit and added. That is, after determining the sub-unit that needs to be added with the watermark code corresponding to the frame sequence and the target sub-unit that needs to be added with the first watermark corresponding to the frame sequence in one frame sequence, the second watermark corresponding to the frame sequence may be taken as the target watermark of the remaining sub-units in the frame sequence and added.

Exemplarily, after the sub-unit 1 with the second serial number of 1 in the watermark unit 2 corresponding to the video 1 in Fig. 3 is taken as the target sub-unit, it is still necessary to determine the target watermark of sub-units other than the target sub-unit in the watermark unit 2. In this case, the second watermark 1 corresponding to the first frame sequence may be obtained, and then the second watermark is taken as the target watermark of sub-units other than the target sub-unit in the watermark unit 2 and added.

For another example, in Fig. 3, the target watermark of the sub-unit 2 in the watermark unit 1 of the video 2 is the first watermark 2 corresponding to the first frame sequence, and the target watermark of the other sub-units in the watermark unit 1 is the second watermark 2 corresponding to the first frame sequence. The target watermark of the sub-unit 3 in the watermark unit 1 of the video 3 is the first watermark 3 corresponding to the first frame sequence, and the target watermark of the sub-unit 3 in the watermark unit 2 is also the first watermark 3 corresponding to the first frame sequence. The target watermark of the other sub-units in the watermark unit 1 and the watermark unit 2 is the second watermark 3 corresponding to the first frame sequence. The target watermark of the sub-unit 4 in the watermark unit 1 of the video 4 is the first watermark 4 corresponding to the first frame sequence, and the target watermark of the sub-unit 4 in the watermark unit 2 is also the first watermark 4 corresponding to the first frame sequence. The target watermark of other sub-units in the watermark unit 1 and the watermark unit 2 is the second watermark 4 corresponding to the first frame sequence.

Further, after adding the corresponding target watermarks to the respective sub-units in the target watermark unit, it may be further determined whether there are other watermark units that have not been added with watermarks in the frame sequence. If not, the process returns to the step of determining whether the respective frame sequences corresponding to the original video are all embedded with the corresponding target watermarks. If yes, the corresponding target watermark may be added to other watermark units according to the watermark embedding method provided by the above embodiments, until the corresponding target watermark is added to the sub-units in the respective watermark units in the frame sequence, and the process returns to the step of determining whether the respective frame sequences corresponding to the original video are all embedded with the corresponding target watermarks.

In this way, for each frame sequence, the three codes corresponding to the frame sequence, namely, the watermark code, the first watermark and the second watermark, are arranged in the respective sub-units in the frame sequence, so that after the watermark video is subjected to the pixel median transformation operation based on multiple videos, it can be ensured that the watermark code can be extracted as a median, thereby realizing accurate extraction of the respective original watermarks from the video after content transformation.

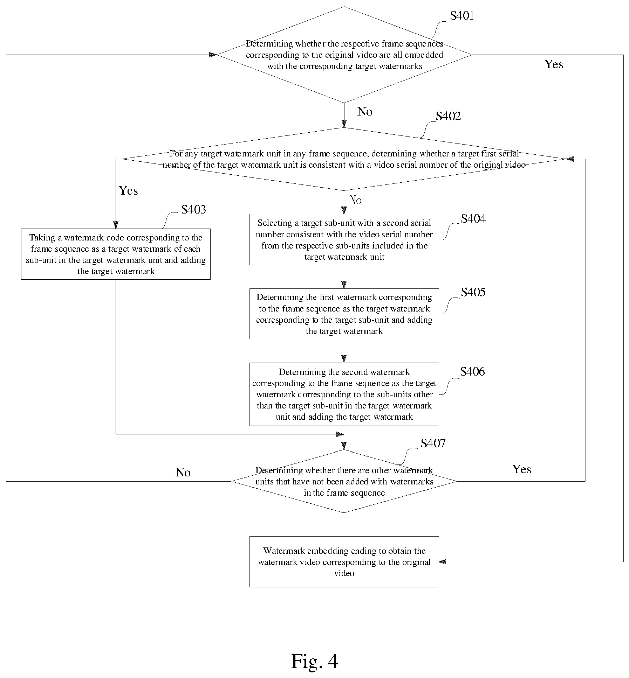

As shown in Fig. 4, which is a specific implementation flowchart of adding a target watermark provided by embodiments of the present disclosure, the method may include the following steps.

Starting watermark embedding.

S401, determining whether the respective frame sequences corresponding to the original video are all embedded with the corresponding target watermarks.

If yes, the watermark embedding ends to obtain a watermark video corresponding to the original video. If not, the following S402 is performed.

S402, for any target watermark unit in any frame sequence, determining whether a target first serial number of the target watermark unit is consistent with a video serial number of the original video.

If yes, the following S403 is performed. If not, the following S404 to S406 are performed.

S403, taking a watermark code corresponding to the frame sequence as a target watermark of each sub-unit in the target watermark unit and adding the target watermark, and then performing the following S407.

S404, selecting a target sub-unit with a second serial number consistent with the video serial number from the respective sub-units included in the target watermark unit.

S405, determining the first watermark corresponding to the frame sequence as the target watermark corresponding to the target sub-unit and adding the target watermark.

S406, determining the second watermark corresponding to the frame sequence as the target watermark corresponding to the sub-units other than the target sub-unit in the target watermark unit and adding the target watermark.

S407, determining whether there are other watermark units that have not been added with watermarks in the frame sequence.

If yes, the process returns to S402 above until the corresponding target watermarks are added to the sub-units in the respective watermark units in the frame sequence. Then, the process returns to the step of determining whether the respective frame sequences corresponding to the original video are all embedded with the corresponding target watermarks.

If not, the process returns to S401, that is, determining whether the respective frame sequences corresponding to the original video are all embedded with the corresponding target watermarks, until the watermark embedding ends to obtain the watermark video corresponding to the original video.

For the specific implementation steps of the above S401 to S407, reference may be made to the above embodiments, which will not be repeated here.

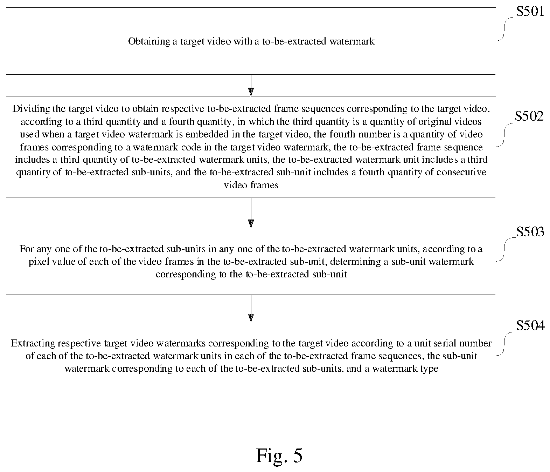

In an embodiment, the embodiments of the present disclosure further provide a watermark extraction method matching the watermark embedding method provided by the above embodiments. By using the watermark extraction method, the watermark extraction may be performed on the video embedded with the watermark by using the watermark embedding method provided by the above embodiments. As shown in Fig. 5, which is a flowchart of a watermark extraction method provided by the embodiments of the present disclosure, the method may include the following steps.

S501, obtaining a target video with a to-be-extracted watermark.

In the specific implementations, for any video obtained on the video platform, after the video is obtained, the similarity between the video and the video of the copyright owner may be calculated. When the similarity is greater than a preset threshold, and the provider of the video is inconsistent with the copyright owner, it indicates that the video may be a video used in infringement, and the video may be determined as the target video with the to-be-extracted watermark, and the watermark extraction from the target video needs to be performed by using the following steps S502 to S504. When the watermark can be extracted, the video leakage party of the target video can be determined by using the extracted watermark.

S502, dividing the target video to obtain respective to-be-extracted frame sequences corresponding to the target video, according to a third quantity and a fourth quantity, in which the third quantity is a quantity of original videos used when a target video watermark is embedded in the target video, the fourth number is a quantity of video frames corresponding to a watermark code in the target video watermark, the to-be-extracted frame sequence includes a third quantity of to-be-extracted watermark units, the to-be-extracted watermark unit includes a third quantity of to-be-extracted sub-units, and the to-be-extracted sub-unit includes a fourth quantity of consecutive video frames.

Here, the target video watermark is the watermark included in the target video, which may include one or more watermarks. Exemplarily, when the target video is a video embedded with a watermark by using the above watermark embedding method, the third quantity may be the quantity/number of original videos used when the target video watermark is embedded in the target video, and the fourth number may be the quantity/number of consecutive video frames corresponding to one watermark code. For example, when the target video is a video obtained after the pixel median transformation operation based on multiple videos is performed on the above watermark video 1, 2 and 3, the third quantity may be equal to the above first quantity, the fourth quantity may be equal to the above second quantity, and the target video watermark in the target video may include watermarks ID1 to ID3.

Optionally, the third ID may be predetermined according to the number of original videos used when the watermark embedding is performed on the video of the copyright owner. For example, any video of the copyright owner 1 uses 4 original videos when performing the watermark embedding, then a mapping relationship between the copyright owner and the quantity/number 4 of the original videos may be established. When it is determined that the similarity between the target video and the video of the copyright owner is greater than the preset threshold, the quantity/number 4 may be determined as the third number according to the mapping relationship corresponding to the copyright owner. The fourth quantity may be predetermined according to the number of consecutive video frames corresponding to one watermark bit.

The to-be-extracted frame sequence is the frame sequence obtained after dividing the target video, the to-be-extracted watermark unit is the watermark unit included in the to-be-extracted frame sequence, and the to-be-extracted sub-unit is the sub-unit included in the to-be-extracted watermark unit. One to-be-extracted frame sequence includes the third quantity of to-be-extracted watermark units, one to-be-extracted watermark unit includes the third quantity of to-be-extracted sub-units, and each to-be-extracted sub-unit includes the fourth quantity of consecutive video frames in the target video.

In the specific implementations, for the specific steps of dividing the target video according to the third quantity and the fourth quantity, reference may be made to the above S102, which will not be repeated here.

S503, for any one of the to-be-extracted sub-units in any one of the to-be-extracted watermark units, according to a pixel value of each of the video frames in the to-be-extracted sub-unit, determining a sub-unit watermark corresponding to the to-be-extracted sub-unit.

Here, the sub-unit watermark is the watermark extracted from the to-be-extracted sub-unit.

In the specific implementations, because the encoding of the pixel values in the frame is regular, the sub-unit watermark that can be extracted from the to-be-extracted sub-unit may be determined according to the rule of the pixel values of the respective video frames in the to-be-extracted sub-unit.

S504: extracting respective target video watermarks corresponding to the target video according to a unit serial number of each of the to-be-extracted watermark units in each of the to-be-extracted frame sequences, the sub-unit watermark corresponding to each of the to-be-extracted sub-units, and a watermark type.

Here, the watermark type may specifically include a preset type (which may also be referred to as a guard type) and a target type, the watermark of the preset type may be the above first watermark and the above second watermark, and the watermark of the target type is the watermark code corresponding to the frame sequence.

In the specific implementations, after obtaining the sub-unit watermark corresponding to each to-be-extracted sub-unit, the respective to-be-extracted watermark units with the consistent unit serial number may be determined from the respective to-be-extracted frame sequences, and the to-be-extracted watermark units are taken as a watermark unit group. For each watermark unit group, the target sub-unit watermark of the target type may be determined from the respective to-be-extracted sub-units according to the watermark type of the sub-unit watermark corresponding to each to-be-extracted sub-unit included in the watermark unit group. The target watermark code corresponding to each to-be-extracted watermark unit in the watermark unit group is determined according to the respective target sub-unit watermarks. Finally, the target video watermark corresponding to the watermark unit group may be determined according to the target watermark code corresponding to each to-be-extracted watermark unit based on the timing of the respective to-be-extracted watermark units in the watermark unit group. It should be noted that the target video watermark corresponding to one watermark unit group may be empty.

In this way, after the target video is obtained, the original video is divided by using the third quantity of original videos used when the target video watermark is embedded and the fourth quantity of video frames corresponding to the watermark code, so that the respective frame sequences in the target video can be accurately divided. The rule of the pixel values of the respective video frames in the to-be-extracted sub-unit in the frame sequence is used to accurately determine the sub-unit watermark and the watermark type included in the to-be-extracted sub-unit. Finally, the unit serial number of each to-be-extracted watermark unit, the sub-unit watermark and the watermark type are used to accurately restore the respective original target video watermarks included in the target video. Furthermore, the video leakage party may be accurately located according to the video provider corresponding to the restored target video watermark, to achieve the object of video leakage detection.

In an embodiment, the above S504 may be implemented according to the following sub-steps:

Sub-step 1, filtering out the sub-unit watermark of the preset type according to the watermark type of the sub-unit watermark corresponding to each to-be-extracted sub-unit.

In the specific implementations, after determining the sub-unit watermark corresponding to each to-be-extracted sub-unit, the sub-unit watermark of the preset type may be filtered out. In this way, the sub-unit watermarks that are all of the target type may be retained.

Sub-step 2, for any to-be-extracted watermark unit, determining a target watermark code corresponding to the to-be-extracted watermark unit according to the sub-unit watermarks included in the to-be-extracted watermark unit after filtering.

Here, the sub-unit watermark after filtering is the watermark of the target type that is retained.

In the specific implementations, for any to-be-extracted watermark unit, when there is one sub-unit watermark included in the to-be-extracted watermark unit after filtering, the sub-unit watermark after filtering may be directly taken as the target watermark code corresponding to the to-be-extracted watermark unit. On the contrary, when there are a plurality of sub-unit watermarks included in the to-be-extracted watermark unit after filtering, the mode sub-unit watermark of the plurality of sub-unit watermarks may be taken as the target watermark code corresponding to the to-be-extracted watermark unit. The mode sub-unit watermark is one watermark with the largest quantity/number in the plurality of sub-unit watermarks.

In this way, because the first watermark and the second watermark of the preset type try their best to ensure the distinction from the watermark code of the target type in terms of coding, and try their best to ensure that the watermark type of the currently extracted sub-unit watermark can be accurately determined in the extraction in terms of coding distance, the target watermark code of the target type corresponding to each to-be-extracted watermark unit may be determined based on the determined watermark type of each sub-unit watermark.

Sub-step 3, extracting the respective target video watermarks corresponding to the target video according to the unit serial number and the target watermark code corresponding to each to-be-extracted watermark unit.

Here, the target video watermark extracted from the target video may be the watermark embedded by using the watermark embedding method provided by the embodiments of the present disclosure. After extracting the respective target video watermarks from the target video, whether the target video is an infringement video may be determined according to whether the target video watermark is consistent with the watermark of the copyright owner.

Moreover, when a plurality of target video watermarks are extracted from the target video, it not only indicates that the target video is a video obtained after performing the pixel median transformation operation based on multiple videos on the watermark videos embedded with the respective target video watermarks, but also may determine the number of videos participating in the pixel median transformation operation based on multiple videos according to the number of target video watermarks when the target video is determined as the video used in infringement.

In the specific implementations, according to the unit serial number corresponding to each to-be-extracted watermark unit, the watermark unit group corresponding to the same unit serial number may be determined. The target watermark codes in the respective watermark unit groups are sorted according to the timing of the video frames included in the respective to-be-extracted watermark units in each watermark unit group, so as to obtain the to-be-embedded watermark corresponding to the watermark unit group, and the to-be-embedded watermark is taken as one to-be-embedded watermark extracted from the target video. In this way, by dividing to obtain the respective watermark unit groups and the target watermark code corresponding to the to-be-extracted watermark unit in each watermark unit group, the respective target video watermarks may be accurately extracted from the target video. Then, when it is determined that the target video watermark is consistent with the watermark of the copyright owner, it may indicate that the target video is a video used in infringement. On the contrary, it indicates that the target video is only similar to the video of the copyright owner, and does not necessarily belong to the video used in infringement.

In this way, by embedding the first watermark, the second watermark and the original watermark code together, the accuracy and success rate of extracting the original watermark may be improved after the watermark video is subjected to the pixel median transformation operation based on multiple videos.

Exemplarily, the target video may be a video obtained after performing the pixel median transformation operation based on multiple videos on at least part of the plurality of watermark videos obtained by using the watermark embedding method provided by the embodiments of the present disclosure. The target video is a video waiting to extract the target video watermark therein, and the target video watermark may be a watermark included in each watermark video participating in the pixel median transformation operation based on multiple videos. Exemplarily, the to-be-embedded watermark in the watermark video 1 is the watermark ID1, the to-be-embedded watermark in the watermark video 2 is the watermark ID2, the to-be-embedded watermark in the watermark video 3 is the watermark ID3, and after the target video is obtained by using the watermark video 1 to 3 to participate in the pixel median transformation operation based on multiple videos, the target video watermarks corresponding to the target video are the watermarks ID1 to ID13.

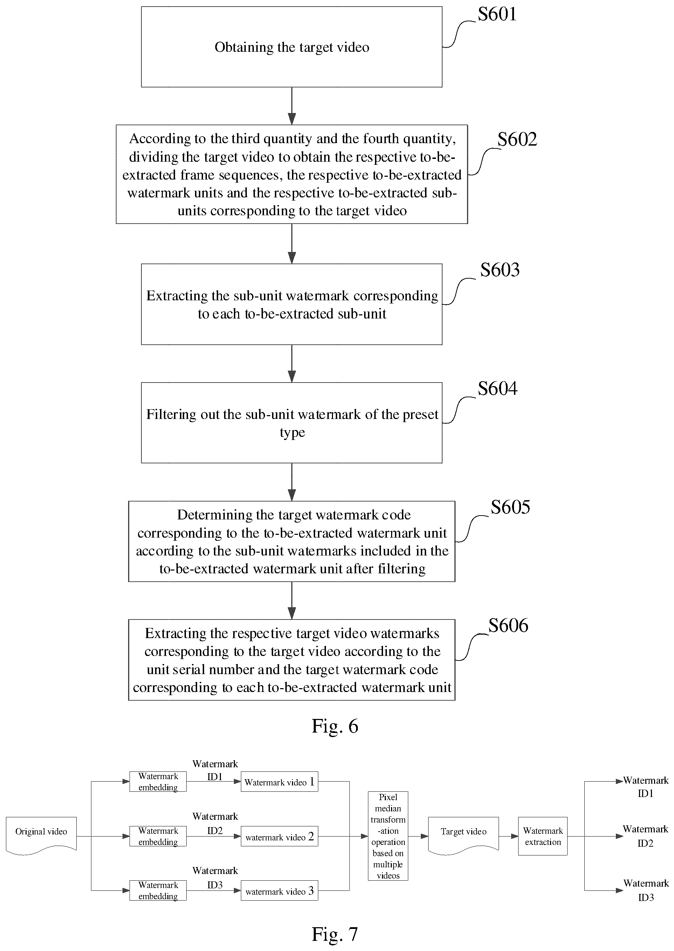

As shown in Fig. 6, which is a specific implementation flowchart of extracting the target video watermark corresponding to the target video provided by the embodiments of the present disclosure, the method may include the following steps.

S601, obtaining the target video.

Here, when the similarity between the target video and the video of the copyright owner is greater than the preset threshold, it may indicate that the target video may be a video subjected to the pixel median transformation operation based on multiple videos, which may be specifically determined by using the following S602 to S606.

S602, according to the third quantity and the fourth quantity, dividing the target video to obtain the respective to-be-extracted frame sequences, the respective to-be-extracted watermark units and the respective to-be-extracted sub-units corresponding to the target video.

Specifically, reference may be made to the above S502 for this step.

S603, extracting the sub-unit watermark corresponding to each to-be-extracted sub-unit.

S604, filtering out the sub-unit watermark of the preset type.

S605, determining the target watermark code corresponding to the to-be-extracted watermark unit according to the sub-unit watermarks included in the to-be-extracted watermark unit after filtering.

S606, extracting the respective target video watermarks corresponding to the target video according to the unit serial number and the target watermark code corresponding to each to-be-extracted watermark unit.

For the specific implementation steps of the above S601 to S606, reference may be made to the above embodiments, which will not be repeated here.

As shown in Fig. 7, which is a schematic diagram of an implementation process of a watermark embedding and extraction method provided by the embodiments of the present disclosure, the method may include the following steps.

The original videos are obtained, and the corresponding to-be-embedded watermarks are embedded in the plurality of original videos respectively according to the watermark embedding method provided by the embodiments of the present disclosure, to obtain the watermark videos corresponding to the respective original videos. In Fig. 7, the to-be-embedded watermarks may include a watermark ID1, a watermark ID2 and a watermark ID3, and the correspondingly obtained watermark videos are watermark videos 1 to 3. After that, the pixel median transformation operation based on multiple videos is performed by using the watermark videos 1 to 3 to obtain the target video after content transformation. Finally, the watermark extraction operation may be performed by using the watermark extraction method provided by the embodiments of the present disclosure, to realize extracting the respective target video watermarks (namely, the watermark ID1, the watermark ID2 and the watermark ID3) from the target video. That is, the watermark extraction is performed on the target video according to the method of the above steps S501 to S504, to obtain the respective target video watermarks corresponding to the target video.

In this way, because the watermark embedding method provided by the embodiments of the present disclosure has good robustness, after the video is subjected to the pixel median transformation operation based on multiple videos, the watermark ID participating in the pixel median transformation operation based on multiple videos can be accurately extracted from the video after content transformation, thereby achieving the object of video leakage detection. As shown in the following Table 1, which is a schematic diagram of extraction results of randomly selecting part of watermark videos to perform the pixel median transformation operation based on multiple videos after embedding the watermark by using the watermark embedding method provided by the embodiments of the present disclosure, and then performing the watermark extraction on the video after content transformation by using the watermark extraction method provided by the embodiments of the present disclosure.

(Table 1)

| Number of watermark videos | Number of videos participating in pixel median transformation operation based on multiple videos for content transformation | Watermark length | Extraction result |
|---|---|---|---|
| 6 | 3 | 20bit | Successfully extracted |
| 6 | 4 | 20bit | Successfully extracted |
| 6 | 5 | 20bit | Successfully extracted |
| 6 | 6 | 20bit | Successfully extracted |

Based on the above Table 1, when the number of videos participating in the pixel median transformation operation based on multiple videos is less than or equal to the number of watermark videos, the watermark in the watermark video obtained after embedding the watermark by using the watermark embedding method provided by the embodiments of the present disclosure will not be easily changed or removed under the pixel median transformation operation based on multiple videos, and the security of the watermark video is guaranteed.

Those skilled in the art can understand that in the above methods of the specific implementations, the writing sequence of the steps does not mean any limitation to the implementation process of the strict execution sequence, and the specific execution sequence of the steps should be determined according to their functions and possible internal logic.

Based on the same inventive concept, the embodiments of the present disclosure further provide a watermark embedding apparatus corresponding to the watermark embedding method. Since the principle of solving the problem by the apparatus in the embodiments of the present disclosure is similar to the above watermark embedding method in the embodiments of the present disclosure, the implementation of the apparatus may refer to the implementation of the method, and the corresponding parts will not be repeated.

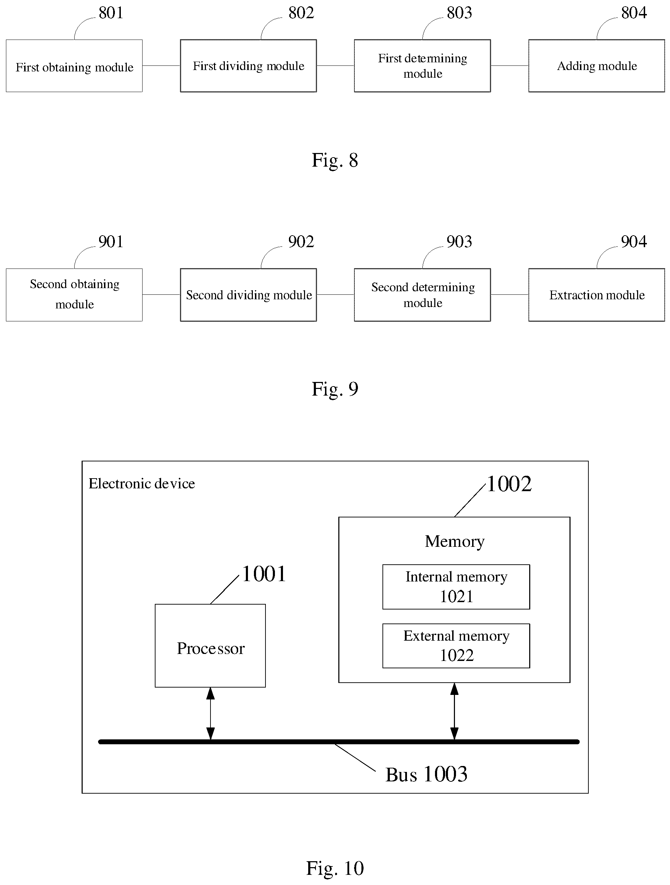

As shown in Fig. 8, which is a schematic diagram of a watermark embedding apparatus provided by the embodiments of the present disclosure, the apparatus includes:

a first obtaining module 801, configured to obtain a plurality of original videos corresponding to a same video content, and a video serial number and a to-be-embedded watermark corresponding to each of the plurality of original videos, in which the to-be-embedded watermark includes at least one watermark code;
a first dividing module 802, configured to, for each original video of the plurality of original videos, divide the original video according to a first quantity and a second quantity to obtain a frame sequence of the original video, in which the first quantity indicates a quantity of the plurality of original videos, the second quantity indicates a quantity of video frames corresponding to the at least one watermark code in the to-be-embedded watermark, the frame sequence includes the first quantity of watermark units, each of the watermark units includes the first quantity of sub-units, and each of the sub-units includes the second quantity of consecutive video frames;

a first determining module 803, configured to allocate a watermark code for each of the frame sequences according to a timing of each of the frame sequences and an order of each watermark code, and determine a first watermark and a second watermark corresponding to each of the frame sequences according to the watermark code allocated to each of the frame sequences; and

an adding module 804, configured to add a target watermark for each sub-unit to obtain a watermark video corresponding to the original video, according to the video serial number of each of the plurality of original videos, a first serial number of each watermark unit in each of the frame sequences, and a second serial number of the sub-unit in each watermark unit, in which the target watermark is one of a group consisting of the first watermark, the second watermark and the watermark code.

In a possible implementation, when determining the first watermark and the second watermark corresponding to each of the frame sequences according to the watermark code allocated to each of the frame sequences, the first determining module 803 is configured to:

for each of the frame sequences, determine a watermark code corresponding to each of the sub-units in the frame sequence according to the watermark code allocated to the frame sequence;

according to the watermark code corresponding to each of the sub-units, determine a sub-code corresponding to each of the video frames in the sub-unit; and

according to the sub-code corresponding to each of the video frames in the sub-unit, determine the first watermark and the second watermark corresponding to the frame sequence.

In a possible implementation, when determining the first watermark and the second watermark corresponding to the frame sequence according to the sub-code corresponding to each of the video frames in the sub-unit, the first determining module 803 is configured to:

select at least one first video frame and at least one second video frame from the video frames in the sub-unit by using the second quantity and a preset selection manner;

according to a frame order of the first video frame, invert a sub-code corresponding to each first video frame in turn to obtain the first watermark corresponding to the frame sequence; and

according to a frame order of the second video frame, invert a sub-code corresponding to each second video frame in turn to obtain the second watermark corresponding to the frame sequence.

In a possible implementation, when adding the target watermark for each sub-unit according to the video serial number of each of the original videos, the first serial number of each watermark unit in each of the frame sequences, and the second serial number of the sub-unit in each watermark unit, the adding module 804 is configured to:

for any target watermark unit in any one of the frame sequences, determine whether a target first serial number of the target watermark unit is consistent with the video serial number of the original video; and

if yes, determine the watermark code corresponding to the frame sequence as the target watermark corresponding to each sub-unit in the target watermark unit and adding the target watermark.

In a possible implementation, the adding module 804 is further configured to:

when the target first serial number is inconsistent with the video serial number of the original video, select a target sub-unit with a second serial number consistent with the video serial number from the sub-units comprised in the target watermark unit; and

determine the first watermark corresponding to the frame sequence to which the target sub-unit belongs as the target watermark corresponding to the target sub-unit and adding the target watermark.

In a possible implementation, after selecting the target sub-unit with the second number consistent with the video serial number, the adding module 804 is further configured to:

determine the second watermark corresponding to the frame sequence to which the target sub-unit belongs as a target watermark corresponding to the sub-units other than the target sub-unit in the target watermark unit and adding the target watermark.

Based on the same inventive concept, the embodiments of the present disclosure further provide a watermark extraction apparatus corresponding to the watermark extraction method. Since the principle of solving the problem by the apparatus in the embodiments of the present disclosure is similar to the above watermark extraction method in the embodiments of the present disclosure, the implementation of the apparatus may refer to the implementation of the method, and the corresponding parts will not be repeated.

As shown in Fig. 9, which is a schematic diagram of a watermark extraction apparatus provided by the embodiments of the present disclosure, the apparatus includes:

a second obtaining module 901, configured to obtain a target video with a to-be-extracted watermark;

a second dividing module 902, configured to, according to a third quantity and a fourth quantity, divide the target video to obtain respective to-be-extracted frame sequences corresponding to the target video, in which the third quantity is a quantity of original videos used when a target video watermark is embedded in the target video, the fourth quantity is a quantity of video frames corresponding to a watermark code in the target video watermark, the to-be-extracted frame sequence includes a third quantity of to-be-extracted watermark units, each of the to-be-extracted watermark units includes a third quantity of to-be-extracted sub-units, and each of the to-be-extracted sub-units includes a fourth quantity of consecutive video frames;

a second determining module 903, configured to determine a sub-unit watermark corresponding to any to-be-extracted sub-unit in any to-be-extracted watermark unit, according to pixel values of respective video frames in the to-be-extracted sub-unit; and

an extraction module 904, configured to extract respective target video watermarks corresponding to the target video according to a unit serial number of each of the to-be-extracted watermark units in each of the to-be-extracted frame sequences, the sub-unit watermark corresponding to each of the to-be-extracted sub-units, and a watermark type.

In a possible implementation, when extracting the respective target video watermarks corresponding to the target video according to the unit serial number of each of the to-be-extracted watermark units in each of the to-be-extracted frame sequences, the sub-unit watermark corresponding to each of the to-be-extracted sub-units, and the watermark type, the extraction module 904 is configured to:

according to a watermark type of the sub-unit watermark corresponding to each of the to-be-extracted sub-units, filter out the sub-unit watermark of a preset type;

for any to-be-extracted watermark unit, according to the sub-unit watermarks included in the to-be-extracted watermark unit after filtering, determine a target watermark code corresponding to the to-be-extracted watermark unit; and

according to a unit serial number and the target watermark code corresponding to each of the to-be-extracted watermark units, extract the respective target video watermarks corresponding to the target video.

For the description of the processing flow of the respective modules in the apparatus and the interaction flow between the respective modules, reference may be made to the related description in the above method embodiments, which will not be repeated here.

Based on the same technical concept, the embodiments of the present disclosure further provide an electronic device. Referring to Fig. 10, which is a schematic diagram of a structure of an electronic device provided by the embodiments of the present disclosure, the electronic device includes:

a processor 1001, a memory 1002 and a bus 1003. The memory 1002 stores machine-readable instructions executable by the processor 1001, the processor 1001 is configured to execute the machine-readable instructions stored in the memory 1002, and when the machine-readable instructions are executed by the processor 1001, the processor 1001 performs the following steps: S101, obtaining a plurality of original videos corresponding to a same video content, and a video serial number and a to-be-embedded watermark corresponding to each of the plurality of original videos, in which the to-be-embedded watermark includes at least one watermark code; S102, for each original video of the plurality of original videos, dividing the original video according to a first quantity and a second quantity to obtain a frame sequence of the original video, in which the first quantity indicates a quantity of the plurality of original videos, the second quantity indicates a quantity of video frames corresponding to the at least one watermark code in the to-be-embedded watermark, the frame sequence includes the first quantity of watermark units, each of the watermark units includes the first quantity of sub-units, and each of the sub-units includes the second quantity of consecutive video frames; S103, allocating a watermark code for each of the frame sequences according to a timing of each of the frame sequences and an order of each watermark code, and determining a first watermark and a second watermark corresponding to each of the frame sequences according to the watermark code allocated to each of the frame sequences; and S104, adding a target watermark for each sub-unit to obtain a watermark video corresponding to the original video, according to the video serial number of each of the plurality of original videos, a first serial number of each watermark unit in each of the frame sequences, and a second serial number of the sub-unit in each watermark unit, in which the target watermark is one of a group consisting of the first watermark, the second watermark and the watermark code. Alternatively, when the machine-readable instructions are executed by the processor 1001, the processor 1001 performs the following steps: S501, obtaining a target video with a to-be-extracted watermark; S502, according to a third quantity and a fourth quantity, dividing the target video to obtain respective to-be-extracted frame sequences corresponding to the target video, in which the third quantity is a quantity of original videos used when a target video watermark is embedded in the target video, the fourth quantity is a quantity of video frames corresponding to a watermark code in the target video watermark, the to-be-extracted frame sequence includes a third quantity of to-be-extracted watermark units, each of the to-be-extracted watermark units includes a third quantity of to-be-extracted sub-units, and each of the to-be-extracted sub-units includes a fourth quantity of consecutive video frames; S503, for any one of the to-be-extracted sub-units in any one of the to-be-extracted watermark units, according to a pixel value of each of the video frames in the to-be-extracted sub-unit, determining a sub-unit watermark corresponding to the to-be-extracted sub-unit; and S504, extracting respective target video watermarks corresponding to the target video according to a unit serial number of each of the to-be-extracted watermark units in each of the to-be-extracted frame sequences, the sub-unit watermark corresponding to each of the to-be-extracted sub-units, and a watermark type.

The above memory 1002 includes an internal memory 1021 and an external memory 1022. The internal memory 1021 is also referred to as an internal storage, which is used to temporarily store the operation data in the processor 1001 and the data exchanged with the external memory 1022 such as a hard disk. The processor 1001 exchanges data with the external memory 1022 through the internal memory 1021. When the electronic device is running, the processor 1001 communicates with the memory 1002 through the bus 1003, so that the processor 1001 executes the execution instructions mentioned in the above method embodiments.

The embodiments of the present disclosure further provide a computer-readable storage medium, the computer-readable storage medium stores a computer program thereon, and the computer program, when executed by a processor, executes the steps of the watermark embedding or watermark extraction method according to the above method embodiments. The storage medium may be a volatile or non-volatile computer-readable storage medium.

The computer program product of the watermark embedding method provided by the embodiments of the present disclosure includes a computer-readable storage medium storing program codes, and the instructions included in the program codes may be used to execute the steps of the watermark embedding or watermark extraction method according to the above method embodiments. Reference may be made to the above method embodiments specifically, which will not be repeated here.

The computer program product may be implemented in hardware, software or a combination thereof. In an optional embodiment, the computer program product is embodied as a computer storage medium. In another optional embodiment, the computer program product is embodied as a software product, such as a software development kit (SDK) and the like.

It will be apparent to those skilled in the art that, for the convenience and brevity of description, the specific working process of the apparatus described above may refer to the corresponding process in the foregoing method embodiments, which will not be repeated here. In the several embodiments provided in the present disclosure, it should be understood that the disclosed apparatus and method may be implemented in other manners. The apparatus embodiments described above are only schematic, for example, the division of the units is only a logical function division, and there may be other division manners in the actual implementation. For another example, a plurality of units or components may be combined, or some features may be ignored, or not executed. In addition, the displayed or discussed mutual coupling or direct coupling or communication connection may be through some communication interfaces, and the indirect coupling or communication connection of the apparatus or unit may be electrical, mechanical or other forms.

The unit described as a separate component may or may not be physically separate, and the component displayed as a unit may or may not be a physical unit, that is, it may be located in one place or may be distributed to a plurality of network units. Some or all of the units may be selected according to actual needs to achieve the objects of the solutions of the embodiments.

In addition, the respective functional units in the embodiments of the present disclosure may be integrated into one processing unit, or the respective units may exist physically alone, or two or more units may be integrated into one unit.

The functions, if implemented in the form of software functional units and sold or used as independent products, may be stored in a non-volatile computer-readable storage medium executable by a processor. Based on such understanding, the technical solutions of the present disclosure, or the part that contributes to the known technology or the part of the technical solutions may be embodied in the form of a software product, and the computer software product is stored in a storage medium, including several instructions for causing a computer device (which may be a personal computer, a server, or a network device, etc.) to perform all or part of the steps of the methods described in the embodiments of the present disclosure. The aforementioned storage medium includes: various media that can store program codes, such as a USB flash drive, a mobile hard disk, a read-only memory (ROM), a random-access memory (RAM), a magnetic disk, or an optical disk.

When the technical solution of the present disclosure involves personal information, the product applying the technical solution of the present disclosure has clearly informed of the personal information processing rule and obtained the personal independent consent before processing the personal information. When the technical solution of the present disclosure involves sensitive personal information, the product applying the technical solution of the present disclosure has obtained the personal separate consent before processing the sensitive personal information, and meets the requirement of "express consent" at the same time. For example, at a personal information collection apparatus such as a camera, an explicit and prominent identification is set to inform that the personal information collection range has been entered, and the personal information will be collected. When an individual voluntarily enters the collection range, it is deemed that he or she agrees to the collection of his or her personal information. Alternatively, when the personal information processing rule is informed by using an obvious identification/information on the personal information processing apparatus, the personal authorization is obtained by means of pop-up information or asking the individual to upload his or her personal information by himself or herself. The personal information processing rule may include information such as a personal information processor, a purpose of personal information processing, a processing manner, and types of personal information to be processed.

Finally, it should be noted that the above embodiments are only specific implementations of the present disclosure, which are used to illustrate the technical solution of the present disclosure, but not to limit it. The protection scope of the present disclosure is not limited thereto. Although the present disclosure has been described in detail with reference to the aforementioned embodiments, those of ordinary skill in the art should understand that any technician familiar with the technical field can still modify the technical solutions recorded in the aforementioned embodiments or can easily think of changes, or equivalently replace some technical features thereof within the technical scope disclosed in the present disclosure. These modifications, changes or replacements do not make the essence of the corresponding technical solutions deviate from the spirit and scope of the technical solutions of the embodiments of the present disclosure, and all should be covered within the protection scope of the present disclosure. Therefore, the protection scope of the present disclosure should be subject to the protection scope of the claims.

**Claims**

1. A watermark embedding method, comprising:

   obtaining a plurality of original videos corresponding to a same video content, and a video serial number and a to-be-embedded watermark corresponding to each of the plurality of original videos, wherein the to-be-embedded watermark comprises at least one watermark code;
   for each original video of the plurality of original videos, dividing the original video according to a first quantity and a second quantity to obtain a frame sequence of the original video, wherein the first quantity indicates a quantity of the plurality of original videos, the second quantity indicates a quantity of video frames corresponding to the at least one watermark code in the to-be-embedded watermark, the frame sequence comprises the first quantity of watermark units, each of the watermark units comprises the first quantity of sub-units, and each of the sub-units comprises the second quantity of consecutive video frames;
   allocating a watermark code for each of the frame sequences according to a timing of each of the frame sequences and an order of each watermark code, and determining a first watermark and a second watermark corresponding to each of the frame sequences according to the watermark code allocated to each of the frame sequences; and
   adding a target watermark for each sub-unit to obtain a watermark video corresponding to the original video, according to the video serial number of each of the plurality of original videos, a first serial number of each watermark unit in each of the frame sequences, and a second serial number of the sub-unit in each watermark unit, wherein the target watermark is one of a group consisting of the first watermark, the second watermark and the watermark code.

2. The method according to claim 1, wherein the determining the first watermark and the second watermark corresponding to each of the frame sequences according to the watermark code allocated to each of the frame sequences comprises:

   for each of the frame sequences, determining a watermark code corresponding to each of the sub-units in the frame sequence according to the watermark code allocated to the frame sequence;
   according to the watermark code corresponding to each of the sub-units, determining a sub-code corresponding to each of the video frames in the sub-unit; and
   according to the sub-code corresponding to each of the video frames in the sub-unit, determining the first watermark and the second watermark corresponding to the frame sequence.

3.  The method according to claim 2, wherein according to the sub-code corresponding to each of the video frames in the sub-unit, the determining the first watermark and the second watermark corresponding to the frame sequence comprises:

    selecting at least one first video frame and at least one second video frame from the video frames in the sub-unit by using the second quantity and a preset selection manner;
    according to a frame order of the first video frame, inverting a sub-code corresponding to each first video frame in turn to obtain the first watermark corresponding to the frame sequence; and
    according to a frame order of the second video frame, inverting a sub-code corresponding to each second video frame in turn to obtain the second watermark corresponding to the frame sequence.

4.  The method according to any one of claims 1 to 3, wherein the adding the target watermark for each sub-unit according to the video serial number of the original video, the first serial number of each watermark unit in each of the frame sequences, and the second serial number of the sub-unit in each watermark unit comprises:

    for any target watermark unit in any one of the frame sequences, determining whether a target first serial number of the target watermark unit is consistent with the video serial number of the original video; and
    if yes, determining the watermark code corresponding to the frame sequence as the target watermark corresponding to each sub-unit in the target watermark unit and adding the target watermark.

5.  The method according to claim 4, further comprising:

    when the target first serial number is inconsistent with the video serial number of the original video, selecting a target sub-unit with a second serial number consistent with the video serial number from the sub-units comprised in the target watermark unit; and
    determining the first watermark corresponding to the frame sequence to which the target sub-unit belongs as the target watermark corresponding to the target sub-unit and adding the target watermark.

6.  The method according to claim 5, wherein after selecting the target sub-unit with the second number consistent with the video serial number, the method further comprises:
    determining the second watermark corresponding to the frame sequence to which the target sub-unit belongs as a target watermark corresponding to the sub-units other than the target sub-unit in the target watermark unit and adding the target watermark.

7.  A watermark extraction method, comprising:

    obtaining a target video with a to-be-extracted watermark;
    according to a third quantity and a fourth quantity, dividing the target video to obtain respective to-be-extracted frame sequences corresponding to the target video, wherein the third quantity is a quantity of original videos used when a target video watermark is embedded in the target video, the fourth quantity is a quantity of video frames corresponding to a watermark code in the target video watermark, the to-be-extracted frame sequence comprises a third quantity of to-be-extracted watermark units, each of the to-be-extracted watermark units comprises a third quantity of to-be-extracted sub-units, and each of the to-be-extracted sub-units comprises a fourth quantity of consecutive video frames;
    for any one of the to-be-extracted sub-units in any one of the to-be-extracted watermark units, according to a pixel value of each of the video frames in the to-be-extracted sub-unit, determining a sub-unit watermark corresponding to the to-be-extracted sub-unit; and
    extracting respective target video watermarks corresponding to the target video according to a unit serial number of each of the to-be-extracted watermark units in each of the to-be-extracted frame sequences, the sub-unit watermark corresponding to each of the to-be-extracted sub-units, and a watermark type.

8.  The method according to claim 7, wherein the extracting the respective target video watermarks corresponding to the target video according to a unit serial number of each of the to-be-extracted watermark units in each of the to-be-extracted frame sequences, the sub-unit watermark corresponding to each of the to-be-extracted sub-units, and a watermark type comprises:

    according to a watermark type of the sub-unit watermark corresponding to each of the to-be-extracted sub-units, filtering out the sub-unit watermark of a preset type;

for any to-be-extracted watermark unit, according to the sub-unit watermarks comprised in the to-be-extracted watermark unit after filtering, determining a target watermark code corresponding to the to-be-extracted watermark unit; and

according to a unit serial number and the target watermark code corresponding to each of the to-be-extracted watermark units, extracting the respective target video watermarks corresponding to the target video.

9. A watermark embedding apparatus, comprising:

a first obtaining module, configured to obtain a plurality of original videos corresponding to a same video content, and a video serial number and a to-be-embedded watermark corresponding to each of the plurality of original videos, wherein the to-be-embedded watermark comprises at least one watermark code;

a first dividing module, configured to, for each original video of the plurality of original videos, divide the original video according to a first quantity and a second quantity to obtain a frame sequence of the original video, wherein the first quantity indicates a quantity of the plurality of original videos, the second quantity indicates a quantity of video frames corresponding to the at least one watermark code in the to-be-embedded watermark, the frame sequence comprises the first quantity of watermark units, each of the watermark units comprises the first quantity of sub-units, and each of the sub-units comprises the second quantity of consecutive video frames;

a first determining module, configured to allocate a watermark code for each of the frame sequences according to a timing of each of the frame sequences and an order of each watermark code, and determine a first watermark and a second watermark corresponding to each of the frame sequences according to the watermark code allocated to each of the frame sequences; and

an adding module, configured to add a target watermark for each sub-unit to obtain a watermark video corresponding to the original video, according to the video serial number of each of the plurality of original video, a first serial number of each watermark unit in each of the frame sequences, and a second serial number of the sub-unit in each watermark unit, wherein the target watermark is one of a group consisting of the first watermark, the second watermark and the watermark code.

10. A watermark extraction apparatus, comprising:

a second obtaining module, configured to obtain a target video with a to-be-extracted watermark;

a second dividing module, configured to, according to a third quantity and a fourth quantity, divide the target video to obtain respective to-be-extracted frame sequences corresponding to the target video, wherein the third quantity is a quantity of original videos used when a target video watermark is embedded in the target video, the fourth quantity is a quantity of video frames corresponding to a watermark code in the target video watermark, the to-be-extracted frame sequence comprises a third quantity of to-be-extracted watermark units, each of the to-be-extracted watermark units comprises a third quantity of to-be-extracted sub-units, and each of the to-be-extracted sub-units comprises a fourth quantity of consecutive video frames;

a second determining module, configured to, for any one of the to-be-extracted sub-units in any one of the to-be-extracted watermark units, according to a pixel value of each of the video frames in the to-be-extracted sub-unit, determine a sub-unit watermark corresponding to the to-be-extracted sub-unit; and

an extraction module, configured to extract respective target video watermarks corresponding to the target video according to a unit serial number of each of the to-be-extracted watermark units in each of the to-be-extracted frame sequences, the sub-unit watermark corresponding to each of the to-be-extracted sub-units, and a watermark type.

11. An electronic device, comprising: a processor, and a memory, wherein the memory stores machine-readable instructions executable by the processor, the processor is configured to execute the machine-readable instructions stored in the memory, and when the machine-readable instructions are executed by the processor, the processor performs steps of the watermark embedding method according to any one of claims 1 to 6; or the processor performs steps of the watermark extraction method according to claim 7 or 8.

12. A computer-readable storage medium, wherein the computer-readable storage medium stores a computer program thereon, and the computer program, when executed by an electronic device, causes the electronic device to perform steps of the watermark embedding method according to any one of claims 1 to 6; or the computer program, when executed by an electronic device, causes the electronic device to perform steps of the watermark extraction method according to claim 7 or 8.

Obtaining a plurality of original videos corresponding to a same video content, and a video serial number and a to-be-embedded watermark corresponding to each of the plurality of original videos, in which the to-be-embedded watermark includes at least one watermark code

S101

For each original video of the plurality of original videos, dividing the original video according to a first quantity and a second quantity to obtain a frame sequence of the original video, in which the first quantity indicates a quantity of the plurality of original videos, the second quantity indicates a quantity of video frames corresponding to the at least one watermark code in the to-be-embedded watermark, the frame sequence includes the first quantity of watermark units, each of the watermark units includes the first quantity of sub-units, and each of the sub-units includes the second quantity of consecutive video frames

S102

Allocating a watermark code for each of the frame sequences according to a timing of each of the frame sequences and an order of each watermark code, and determining a first watermark and a second watermark corresponding to each of the frame sequences according to the watermark code allocated to each of the frame sequences

S103

Adding a target watermark for each of the sub-units according to the video serial number of the original video, a first serial number of each of the watermark units in each frame sequence, and a second serial number of the sub-unit in each of the watermark units, to obtain a watermark video corresponding to the original video, in which the target watermark is one of a group consisting of the first watermark, the second watermark and the watermark code

S104

Fig. 1

Obtaining K original videos — S201

Obtaining a video serial number and a to-be-embedded watermark corresponding to each of the original videos — S202

Determining the number of video frames corresponding to each frame sequence according to a value of K and a second quantity indicating the quantity of video frames corresponding to one watermark code in the to-be-embedded watermark — S203

For each of the original videos, determining each watermark unit according to the value of K after dividing to obtain each frame sequence — S204

For each watermark unit, dividing each sub-unit according to the value of K and the second quantity — S205

For each frame sequence, determining the first watermark according to the first video frame selected from any sub-unit of the frame sequence — S206

Determining the second watermark according to the second video frame selected from the sub-unit — S207

Adding a target watermark for each sub-unit according to the video serial number of the original video, the first serial number of each watermark unit in each frame sequence, and the second serial number of the sub-unit in each watermark unit, to obtain a watermark video corresponding to the original video — S208

Fig. 2

| | Watermark unit 1 | | | | Watermark unit 2 | | | |
|---|---|---|---|---|---|---|---|---|
| | Sub-unit 1 | Sub-unit 2 | Sub-unit 3 | Sub-unit 4 | Sub-unit 1 | Sub-unit 2 | Sub-unit 3 | Sub-unit 4 |
| Video 1 | **watermark code 1** | **watermark code 1** | **watermark code 1** | **watermark code 1** | *First watermark 1* | Second watermark 1 | Second watermark 1 | Second watermark 1 |
| Video 2 | Second watermark 2 | *First watermark 2* | Second watermark 2 | Second watermark 2 | **watermark code 2** | **watermark code 2** | **watermark code 2** | **watermark code 2** |
| Video 3 | Second watermark 3 | Second watermark 3 | *First watermark 3* | Second watermark 3 | Second watermark 3 | Second watermark 3 | *First watermark 3* | Second watermark 3 |
| Video 4 | Second watermark 4 | Second watermark 4 | Second watermark 4 | *First watermark 4* | Second watermark 4 | Second watermark 4 | Second watermark 4 | *First watermark 4* |

Fig. 3

S401

Determining whether the respective frame sequences corresponding to the original video are all embedded with the corresponding target watermarks

Yes

No

S402

For any target watermark unit in any frame sequence, determining whether a target first serial number of the target watermark unit is consistent with a video serial number of the original video

Yes

No

S403

Taking a watermark code corresponding to the frame sequence as a target watermark of each sub-unit in the target watermark unit and adding the target watermark

S404

Selecting a target sub-unit with a second serial number consistent with the video serial number from the respective sub-units included in the target watermark unit

S405

Determining the first watermark corresponding to the frame sequence as the target watermark corresponding to the target sub-unit and adding the target watermark

S406

Determining the second watermark corresponding to the frame sequence as the target watermark corresponding to the sub-units other than the target sub-unit in the target watermark unit and adding the target watermark

S407

No

Determining whether there are other watermark units that have not been added with watermarks in the frame sequence

Yes

Watermark embedding ending to obtain the watermark video corresponding to the original video

Fig. 4

Obtaining a target video with a to-be-extracted watermark  ⌐S501

Dividing the target video to obtain respective to-be-extracted frame sequences corresponding to the target video, according to a third quantity and a fourth quantity, in which the third quantity is a quantity of original videos used when a target video watermark is embedded in the target video, the fourth number is a quantity of video frames corresponding to a watermark code in the target video watermark, the to-be-extracted frame sequence includes a third quantity of to-be-extracted watermark units, the to-be-extracted watermark unit includes a third quantity of to-be-extracted sub-units, and the to-be-extracted sub-unit includes a fourth quantity of consecutive video frames  ⌐S502

For any one of the to-be-extracted sub-units in any one of the to-be-extracted watermark units, according to a pixel value of each of the video frames in the to-be-extracted sub-unit, determining a sub-unit watermark corresponding to the to-be-extracted sub-unit  ⌐S503

Extracting respective target video watermarks corresponding to the target video according to a unit serial number of each of the to-be-extracted watermark units in each of the to-be-extracted frame sequences, the sub-unit watermark corresponding to each of the to-be-extracted sub-units, and a watermark type  ⌐S504

Fig. 5

```
                                                                    S601
   ┌─────────────────────────────────────────────┐      ┌
   │                                             │     /
   │          Obtaining the target video         │
   │                                             │
   └─────────────────────────────────────────────┘
                        │
                        ▼
                                                                    S602
   ┌─────────────────────────────────────────────┐      ┌
   │ According to the third quantity and the     │     /
   │ fourth quantity, dividing the target video   │
   │ to obtain the respective to-be-extracted     │
   │ frame sequences, the respective to-be-       │
   │ extracted watermark units and the            │
   │ respective to-be-extracted sub-units          │
   │ corresponding to the target video           │
   └─────────────────────────────────────────────┘
                        │
                        ▼
                                                                    S603
   ┌─────────────────────────────────────────────┐      ┌
   │ Extracting the sub-unit watermark           │     /
   │ corresponding to each to-be-extracted        │
   │ sub-unit                                    │
   └─────────────────────────────────────────────┘
                        │
                        ▼
                                                                    S604
   ┌─────────────────────────────────────────────┐      ┌
   │ Filtering out the sub-unit watermark of the  │     /
   │ preset type                                 │
   └─────────────────────────────────────────────┘
                        │
                        ▼
                                                                    S605
   ┌─────────────────────────────────────────────┐      ┌
   │ Determining the target watermark code       │     /
   │ corresponding to the to-be-extracted         │
   │ watermark unit according to the sub-unit     │
   │ watermarks included in the to-be-extracted   │
   │ watermark unit after filtering              │
   └─────────────────────────────────────────────┘
                        │
                        ▼
                                                                    S606
   ┌─────────────────────────────────────────────┐      ┌
   │ Extracting the respective target video       │     /
   │ watermarks corresponding to the target       │
   │ video according to the unit serial number    │
   │ and the target watermark code corresponding  │
   │ to each to-be-extracted watermark unit       │
   └─────────────────────────────────────────────┘
```

Fig. 6

Fig. 7

801

802

803

804

| First obtaining module | First dividing module | First determining module | Adding module |

Fig. 8

901

902

903

904

| Second obtaining module | Second dividing module | Second determining module | Extraction module |

Fig. 9

Electronic device

1002

Memory

1001

Internal memory
1021

Processor

External memory
1022

Bus 1003

Fig. 10

## INTERNATIONAL SEARCH REPORT

| International application No. |
|---|
| **PCT/CN2024/086828** |

**A.    CLASSIFICATION OF SUBJECT MATTER**

H04N21/8358(2011.01)i

According to International Patent Classification (IPC) or to both national classification and IPC

**B.    FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT; WPABS; WPABSC; VEN; ENTXT; ENTXTC; CJFD; IEEE: 添加, 嵌入, 水印, 视频, 编码, 编号, 数量, 数目, 划分, 分割, 帧, 组, 序列, add, embed, watermark, video, code, encode, ID, quantity, number, partition, segment, frame, group, sequence

**C.    DOCUMENTS CONSIDERED TO BE RELEVANT**

| Category* | Citation of document, with indication, where appropriate, of the relevant passages | Relevant to claim No. |
|---|---|---|
| A | CN 109379642 A (LIANSHANG (XINCHANG) NETWORK TECHNOLOGY CO., LTD.) 22 February 2019 (2019-02-22)<br>description, paragraphs [0078]-[0178] | 1-12 |
| A | CN 103997652 A (BEIJING QIYI CENTURY SCIENCE & TECHNOLOGY CO., LTD.) 20 August 2014 (2014-08-20)<br>entire document | 1-12 |
| A | CN 112040336 A (ZTE CORP.) 04 December 2020 (2020-12-04)<br>entire document | 1-12 |
| A | CN 115797138 A (BEIJING VOLCANO ENGINE TECHNOLOGY CO., LTD.) 14 March 2023 (2023-03-14)<br>entire document | 1-12 |
| A | US 2020221112 A1 (IBM) 09 July 2020 (2020-07-09)<br>entire document | 1-12 |
| A | US 2023112135 A1 (AXIS AB) 13 April 2023 (2023-04-13)<br>entire document | 1-12 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 June 2024** | **20 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/086828** |

**C.      DOCUMENTS CONSIDERED TO BE RELEVANT**

| Category* | Citation of document, with indication, where appropriate, of the relevant passages | Relevant to claim No. |
|---|---|---|
| A | WO 2020244474 A1 (ZTE CORPORATION) 10 December 2020 (2020-12-10)<br>     entire document | 1-12 |
| A | US 2022303642 A1 (PRODUCT DEVELOPMENT ASSOCIATES, INC.) 22 September 2022 (2022-09-22)<br>     29 | |
| A | WO 2022020649 A1 (PIXXY VIDEO SOLUTIONS INC.) 27 January 2022 (2022-01-27) | |

## INTERNATIONAL SEARCH REPORT
### Information on patent family members

International application No.

**PCT/CN2024/086828**

| Patent document cited in search report | | | Publication date (day/month/year) | Patent family member(s) | | | Publication date (day/month/year) |
|---|---|---|---|---|---|---|---|
| CN | 109379642 | A | 22 February 2019 | CN | 109379642 | B | 08 December 2020 |
| CN | 103997652 | A | 20 August 2014 | CN | 103997652 | B | 20 June 2017 |
| CN | 112040336 | A | 04 December 2020 | CN | 112040336 | B | 14 March 2023 |
| | | | | WO | 2020244474 | A1 | 10 December 2020 |
| CN | 115797138 | A | 14 March 2023 | | None | | |
| US | 2020221112 | A1 | 09 July 2020 | US | 10958926 | B2 | 23 March 2021 |
| US | 2023112135 | A1 | 13 April 2023 | TW | 202316298 | A | 16 April 2023 |
| | | | | KR | 20230050220 | A | 14 April 2023 |
| | | | | JP | 2023056491 | A | 19 April 2023 |
| | | | | EP | 4164230 | A1 | 12 April 2023 |
| | | | | CN | 115955312 | A | 11 April 2023 |
| WO | 2020244474 | A1 | 10 December 2020 | CN | 112040336 | A | 04 December 2020 |
| | | | | CN | 112040336 | B | 14 March 2023 |
| US | 2022303642 | A1 | 22 September 2022 | WO | 2022198006 | A1 | 22 September 2022 |
| WO | 2022020649 | A1 | 27 January 2022 | US | 2023260550 | A1 | 17 August 2023 |

Form PCT/ISA/210 (patent family annex) (July 2022)

**REFERENCES CITED IN THE DESCRIPTION**

**Patent documents cited in the description**

- CN 202310403593